# EUROPEAN PATENT APPLICATION

(11) **EP 1 727 083 A1**
(43) Date of publication of application: **29.11.2006**
(21) Application number: 06252696.7
(22) Date of filing: 24.05.2006
(51) Int. Cl.: G06Q 10/00

(54) **Work flow system, work flow processing method and work flow processing program**

(30) Priority: 26.05.2005 JP 2005154261; 09.05.2006 JP 2006130553
(71) Applicant: Ricoh Company, Ltd., Tokyo 143-8555 (JP)
(72) Inventor: Matsui, Yoshiro, Minamisaitama-gun Saitama (JP)
(74) Representative: Leeming, John Gerard

(57) **Abstract**

A work flow system executing a process comprising an activity which is a particular job and a transition which defines an order of the activities, includes a means for stopping the processes on execution; a means for editing the thus-stopped process; a means for checking a consistency of the thus-edited process; a means for determining a re-start position in the process; and a means for re-starting the process from the re-start position.

## Description

Recently, a work flow system by which, when a plurality of persons in charge carry out a work via a communication network, a flow of documents and information to be exchanged thereamong is managed and automated for the purpose of achieving smooth work progress is known. In this connection, see the following documents:
'Work flow system, developing so (1)' by Haruo Hayami, Information Processing Society of Japan, Vol. 39, No. 11, pages 1160-1165 (1998);
'Work flow system, developing so (2)' by Haruo Hayami, Toshiaki Sakaguchi, Ryoichi Shibuya, Information Processing Society of Japan, Vol. 39, No. 12, pages 1258-1263 (1998); and
'Work flow system, developing so (3)' by Haruo Hayami, Ryoichi Shibuya, Nobuo Suzuki, Junichi Ikoma, Yosuke Terashita, Naoki Ueno, Satoru Kaneko, Kiyoshi Hayashi, Information Processing Society of Japan, Vol. 40, No. 5, pages 507-513 (1999);

The work flow system mentioned above may have a problem that, only a fixed work flow defined by a system manager previously is executed, and a flexible response such as preceding an actual work in a manner different from the defined work flow may not be achieved.

In order to solve such a problem, the inventor has proposed a manner of changing a process flexibly on execution, by adding, suspending or anticipating an activity in a process on execution (see Japanese Patent Application No. 2005-9265).

However, in this method, a range of modifying the process is limited to adding, suspending and anticipating of an activity, and deleting an activity is not allowed. As a result, a user's demand may not be satisfactorily satisfied.

The present invention has been devised in consideration of the situation, and an object of the present invention is to provide a work flow system, a work flow processing method and a work flow processing program by which a process in execution can be freely modified.

In order to achieve the object, according to a first aspect of the present invention, a work flow system executing a process including an activity which is a particular job and a transition which defines an order of the activities, includes: a part of stopping the process on execution; a part of editing the thus-stopped process; a part of checking consistency of the thus-edited process; a part of determining a re-start position in the process; and a part of re-starting the process from the re-start position.

According to a second aspect of the present invention, the part of checking consistency of the process may check consistency from existence/absence and a specific value of a process variable read or updated by the activity, and existence/absence of an operation right of a task performing person for the process variable.

According to a third aspect of the present invention, the part of checking consistency of the process may determine whether or not all the possible cases when OR operation is made among parallel transitions' ignition conditions are covered, for a case of the transitions.

According to a fourth aspect of the present invention, the part of checking consistency of the process may give an alarm when finding out any activity which has no possibility of being executed, may not allow editing completion and require re-editing.

According to a fifth aspect of the present invention, the part of checking consistency of the process may determine that an error occurs when an end activity cannot be reached, may not allow editing completion and require re-editing.

According to a sixth aspect of the present invention, the part of determining the re-start position in the process may trace the transitions and the activities from the first activity included in the process, read a change history of the process variable, and, determine the activity or the transition as the re-start position when the activity or the transition has no experience of meeting a termination condition.

According to a seventh aspect of the present invention, the part of determining the re-start position in the process may determine that the process is finished when determining that the activity which has an experience of meeting the termination condition is the last activity.

According to an eighth aspect of the present invention, the part of stopping the process may stop the process by setting the process in a suspended state.

According to a ninth aspect of the present invention, the part of stopping the process may stop the process by setting the process in a terminated state.

According to a tenth aspect of the present invention, contents of editing carried out by the part of editing the process may include change of all the components of the process comprising addition, deletion, change in an order of the activities, addition and deletion of the process variables, change of process termination condition, and change of values of the process variables.

According to an eleventh aspect of the present invention, the part of editing the process may increment a count value of the process variable read or updated by the activity or the transition when adding the activity or the transition, decrement a count value of the process variable read or updated by the activity or the transition when deleting the activity or the transition, and, delete the process variable having the count value being zero.

According to a twelfth aspect of the present invention, the work flow system may further include a part of checking a right of an editor, which checks the right according to an access control list including, for each object included in the process, a user or group which is allowed to edit, and access control indicating the operation right.

According to a thirteenth aspect of the present invention, the work flow system may further include a part of converting a process instance flow obtained from editing and materializing the same into a process definition, and register the process definition for the purpose of reuse.

According to a fourteenth aspect of the present invention, a work flow processing method for executing a process including an activity which is a particular job and a transition which defines an order of the activities, includes the steps of: stopping the processes on execution; editing the thus-stopped process; checking a consistency of the thus-edited process; determining a re-start position in the process; and re-starting the process from the re-start position.

According to a fifteenth aspect of the present invention, a work flow processing program for causing a computer to execute a process including an activity which is a particular job and a transition which defines an order of the activities, includes instructions for causing the program to execute the steps of: stopping the processes on execution; editing the thus-stopped process; checking a consistency of the thus-edited process; determining a re-start position in the process; and re-starting the process from the re-start position.

In the work flow system, work flow processing method and work flow processing program according to the present invention, a process is edited after the process is toped, consistency of the process is checked, a re-start position of the process is determined, and the, the process is re-started therefrom. Accordingly, a situation in which a user improperly modifies the process can be avoided, and the process on execution can be freely modified in a condition in which the process executability is ensured.

Other objects and further features of the present invention will become more apparent from the following detailed description of an exemplary embodiment when read in conjunction with the accompanying drawings, in which:
FIG. 1 shows process components;
FIG. 2 shows process state transition;
FIG. 3 shows activity state transition;
FIG. 4 shows a transition state transition;
FIG. 5 shows a work flow configuration example;
FIG. 6 shows a client and server hardware configuration example;
FIG. 7 shows a work flow system software configuration example;
FIG. 8 shows a work flow definition table example;
FIG. 9 shows an activity definition table example;
FIG. 10 shows a transition definition table example;
FIG. 11 shows a process variable definition table example;
FIG. 12 shows an activity variable definition table example;
FIG. 13 shows a process variable definition reading table example;
FIG. 14 shows an application definition table example;
FIG. 15 shows a process instance table example;
FIG. 16 shows an activity table example;
FIG. 17 shows a transition table example;
FIG. 18 shows a process variable table example;
FIG. 19 shows an activity variable table example;
FIG. 20 shows a process variable change history table example;
FIG. 21 shows a process variable reading table example;
FIG. 22 shows correspondence relationship among process definition XML descriptions, respective tables and so forth;
FIG. 23 shows an example of access control for process objects;
FIG. 24 shows an access control table example;
FIG. 25 shows a sequence showing a process execution start processing example;
FIG. 26 shows a process change concept;
FIG. 27 shows a sequence of a process change processing example;
FIG. 28 shows a graphical interface example for when an activity is added;
FIG. 29 shows a flow chart on a system side when an activity or such is added;
FIG. 30 shows a flow chart on a system side when an activity or such is deleted;
FIG. 31 shows a flow chart of a process consistency check processing example;
FIG. 32 shows a flow chart for details of a process consistency check processing example;
FIG. 33 shows a consistency fault example;
FIG. 34 shows a flow chart of a process re-start position determination example;
FIG. 35 shows a process instance table example for when a process instance is copied and edited;
FIG. 36 shows an activity table example for when a process instance is copied and edited;
FIG. 37 shows a transition table example for when a process instance is copied and edited;
FIG. 38 shows a process variable table example for when a process instance is copied and edited;
FIG. 39 shows an activity variable table example for when a process instance is copied and edited;
FIG. 40 shows a process variable reading table example for when a process instance is copied and edited; and
FIG. 41 shows a graphical user interface example of a process defining tool when a process definition is registered for reuse.

Below, a preferred embodiment of the present invention is described with reference to figures:

### <Process Abstract>

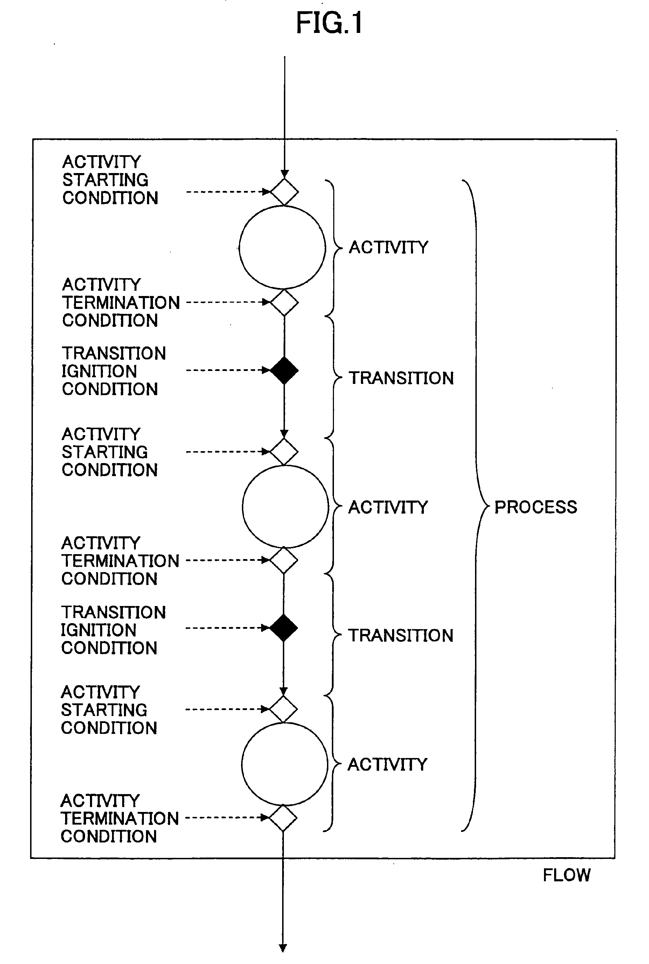

FIG. 1 shows process components. A process includes activities and transitions. As to terms of a work flow system, see "Workflow Management Coalition The Workflow Reference Model" (http://www.wfmc.org/standards/docs/tc003vll.pdf) ; and "Workflow Management Coalition Workflow Standard/Process Definition Interface -- XML Process Definition Language" (http://www.wfmc.org/standards/docs/TC-1025_xpdl_2_2005-10-03.pdf), which show detailed definitions.

A process is a flow of processing for performing a work (which may be called a job or a task). For the process, process variables describing a state of the process are defined. The process variable is used as an activity start condition, termination condition, transition ignition condition, or process termination condition. The activity start condition and termination condition are those for setting and terminating each activity. The transition ignition condition is used mainly for determining a branch connection for branching off to one of a plurality of activities. The process termination condition is used for determining whether or not the process entirety is finished. It is noted that, the process variable's value is held unless it is explicitly changed, before and after a change of a process instance flow, mentioned later.

The activity is a particular job included in the process. The activity may have a state such as: not yet executed, completed, waiting for begin processed, or such. Change among the states may indicate a progressing state of the process. The activity has start condition and termination condition, which are described by a conditional formula with the use of the process variables. An execution result of the activity is stored in the process variable, and the processes variable's change history is stored as a log.

The transition defines an order of processing between the activities. The transition has a state whereby a state transition condition of the activity connecting thereto is determined. A condition for changing from one activity to another activity is called the transition ignition condition. The transition ignition condition is described mainly in a conditional formula with the use of the process variables.

The flow shows a flow chart expressed by the activities and transitions.

The process definition is a template of the process and defines a flow of the process before being executed.

The process instance is a materialized form of the process definition, and includes the contents of the job.

The process instance flow is a flow of the process on execution. The process instance flow is a flow definition of the process instance, and is the same as the original process definition. However, in the present invention, the process instance flow and the process definition are regarded as different substances, and are those which can be operated separately. That is, when the process instance flow is modified, the modification is not reflected by the process definition. Further, when the process definition is modified, the process (process instance) converted into a form of an instance is not reflected therefrom.

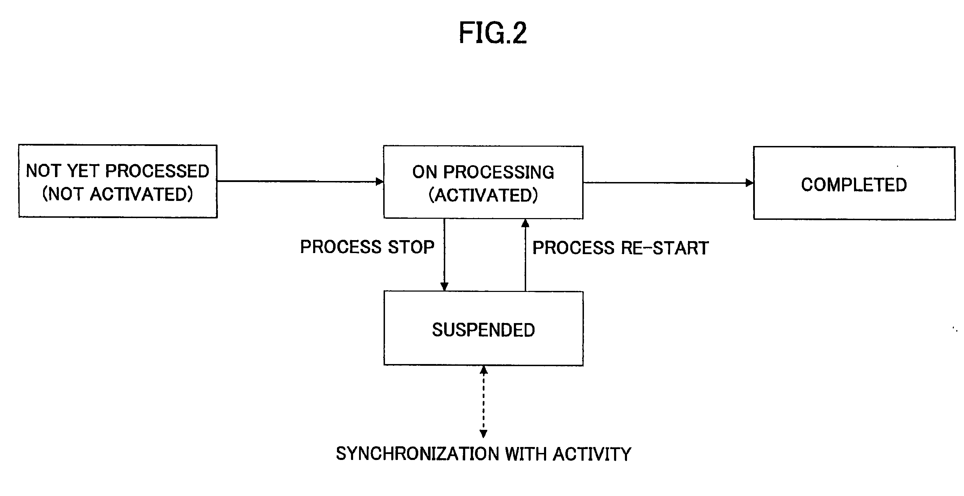

FIG. 2 shows a process state transition, and shows respective states of 'not yet executed (NOT ACTIVATED)', 'on execution (ACTIVATED)', 'SUSPENDED', and 'COMPLETED'. There, when the process 'activated' is stopped, the 'suspended' state occurs, and, again the 'activated' state occurs as a result of the process being re-started. 'Suspended' of the process is in synchronization with 'suspended' of the activity.

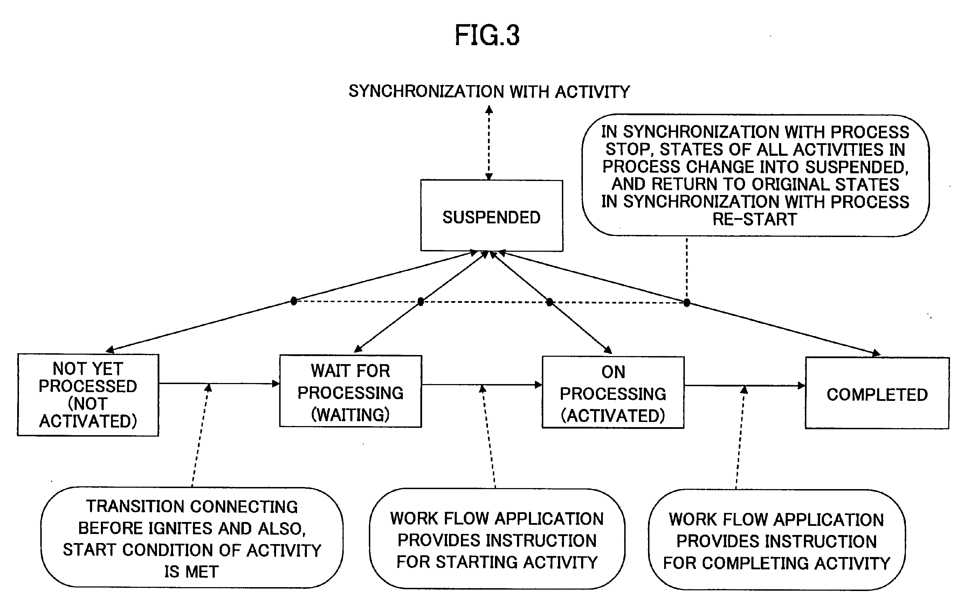

FIG. 3 shows the activity state transition, and shows the respective states of 'not yet executed (NOT ACTIVATED)', 'wait for being executed (WAITING)', 'on execution (ACTIVATED)', 'COMPLETED' and 'SUSPENDED'. The 'not activated' activity enters the 'waiting' state when the transition connecting before ignites and the activity start condition is met. The 'waiting' activity enters the 'activated' state when a start instruction is given by a corresponding work flow application (described later). The 'activated' activity enters the 'completed' state when receiving an activity completing instruction from the work flow application. The activity in the 'not activated', 'waiting', 'activated' or 'completed' state enters the 'suspended' state in synchronization with 'suspended' of the process, and returns to the original state when the process returns to the 'activated' state.

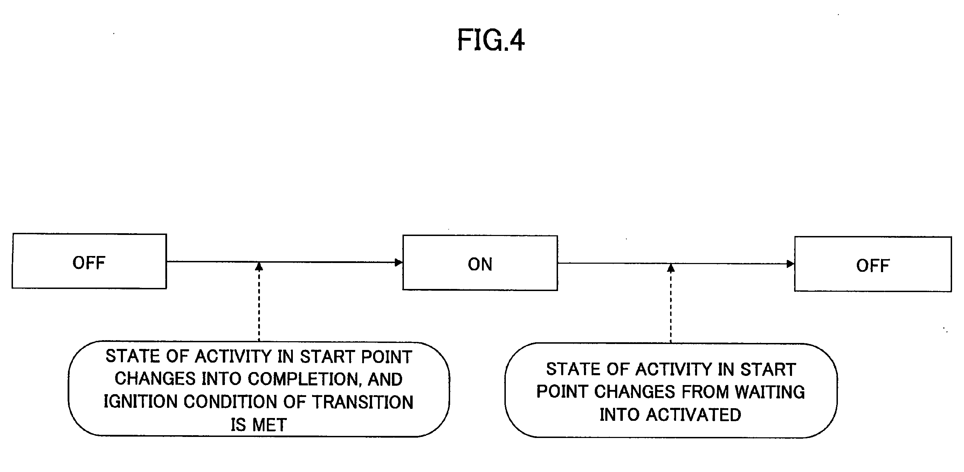

FIG. 4 shows the transition state transition. As shown, the transition has the state of 'OFF' or 'ON'. The transition in the 'off' state enters the 'on' state when the state of the activity at the starting point changes into the 'completed' state and also the transition ignition condition is met. The transition enters the 'off' state again when the activity at the ending position changes from the 'waiting' state into 'activated' state.

### <System Configuration>

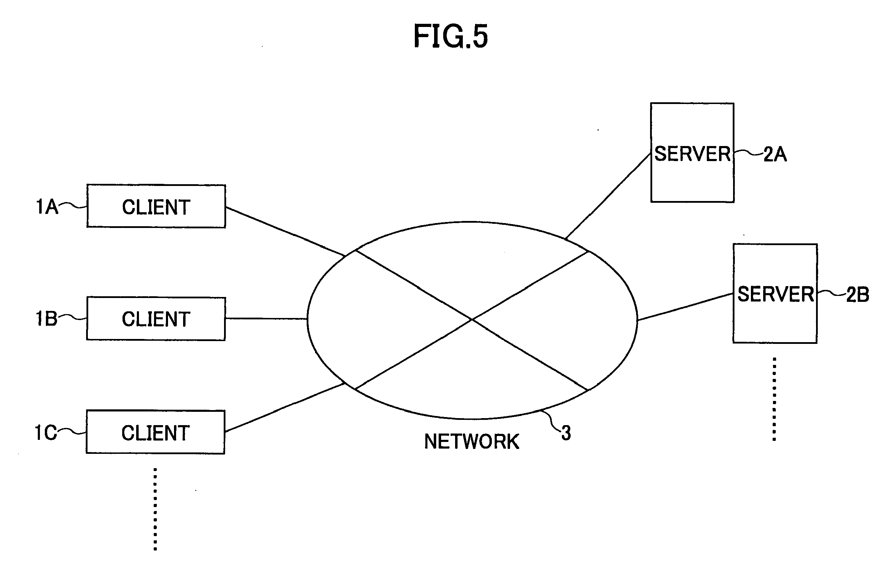

FIG. 5 shows a work flow system configuration example. As shown, the system includes clients 1A, 1B, 1C mainly used by task performing persons who use the work low system; and servers 2A, 2B, ..., which provide functions of the work flow system, all of which are connected via a communication network 3.

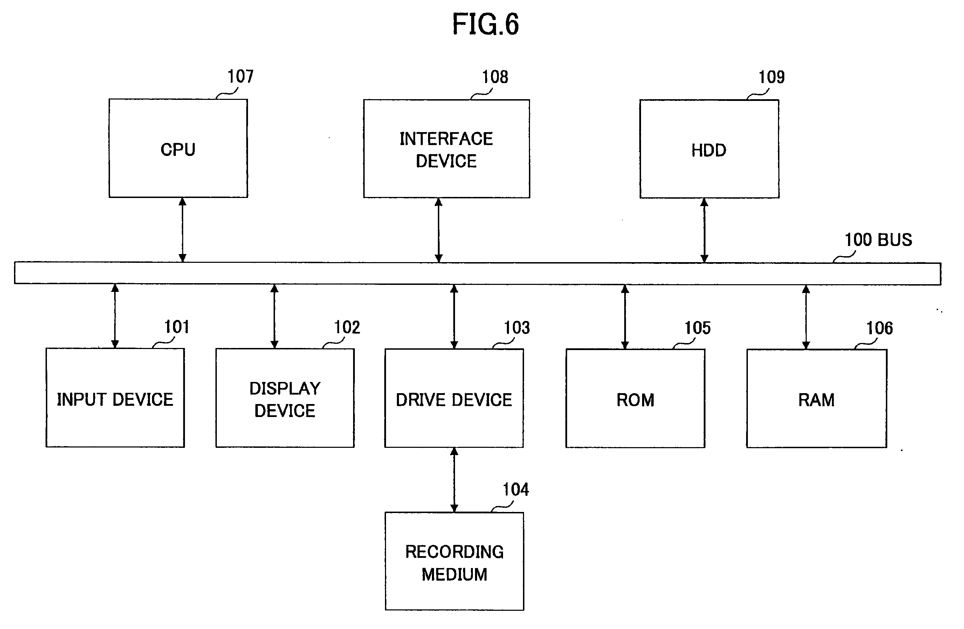

FIG. 6 shows a hardware configuration example of the client or the server of the system of FIG. 5. An input device 101, a display device 102, a drive device 103, a recording medium 104, a ROM 105, a RAM 106, a CPU 107, an interface device 108 and a HDD (hard disk drive) are connected by a bus 100.

The input device 101 includes a keyboard, a mouse and so forth, and is used by a user for inputting various sorts of operation signals to the client or the server. The display device 102 is used for displaying various sorts of information to the user. The interface device 108 is an interface for connecting the client or the server to the communication network or such,.

A program corresponding to software described later is provided to the client or the server by means of the recording medium 104 such as a CD-ROM for example, or is downloaded via the communication network. The recording medium 104 is set in the drive device 103, and the program is installed in the HDD 109 via the drive device 103.

The ROM 105 stores data. The RAM 106 stores a program or such read from the HDD 109 when the client or the server is started up. The CPU 107 executes processing according to the program stored in the RAM 106 read from the HDD 109.

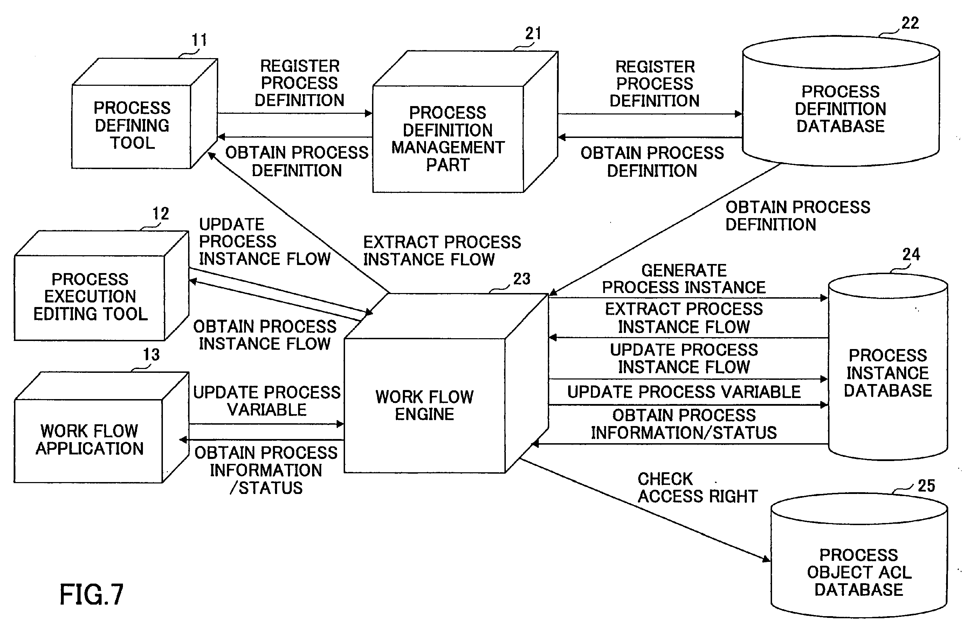

FIG. 7 shows a software configuration example of the work flow system. In FIG. 7, the work flow system includes a process defining tool 11, a process execution editing tool 12, a work flow application 13, which are provided in the client; and a process definition managing part 21, a process definition database 22, a work flow engine 23, a process instance database 24, a process object ACL (access control list) database 25, which are provided in the server.

The process definition tool 11 carries out process defining, which registers the process definition in the process definition database 22 via the process definition managing part 21, or obtains the process definition therefrom. The process defining tool 11 also extracts the process instance flow from the process instance database 24, edits the process instance flow thus extracted for example, and registers the same as the process definition in the process definition database 22 via the process definition managing part 21.

The process definition managing part 21 manages the process definitions stored in the process definition database 22. The process definition managing part 21 responds to a request from the process defining tool 11, to obtain the process definition from the process definition database 22, or register the process definitions in the process definition database 22.

The process definition database 22 stores process definitions, and includes a various sorts of tables described later.

The process execution editing tool 12 is a tool for editing the process instance flow, that is, it obtains the process instance flow from the process instance database 24 via the work flow engine 23, stores the process instance flow, thus edited, in the process instance database 24 via the work flow engine 23, and thus updates the process instance flow. It is noted that editing of the process instance flow may include change of any one of all the components of the process, i.e., adding, deleting or change in the order of the activities, adding or deleting of the process variable, change in the process termination condition, and change in the value of the process variable.

The work flow application 13 executes the activity, i.e., obtains the process information or the process status from the process instance database 24 via the work flow engine 23, or updates the process variables. Further, the work flow application 13 obtains the process definition from the process definition database 22 via the work flow engine 23, generates the process instance based on the process definition, or stores the process thus converted into the instance in the process instance database 24.

The work flow engine 23 responds to a request from the work flow application 13, to obtain the process definition form the process definition database 22, generates the process instance based on the process definition, and stores the same in the process instance database 22, or, responds to a request from the work flow application 13, to obtain the process information of the process instance from the process instance database 22, or updates the process variable of the processes instance stored in the process instance database 24.

The work flow engine 23 responds to a request from the process execution editing tool 12 of the process defining tool 11, to extract the process instance flow from the process instance database 24, or, responds to a request from the process execution editing tool 12, to update the process instance flow stored in the process instance database 24. Further, the work flow engine 23 responds to a process instance updating request or such from the process execution editing tool 12, to read an access right or such for a process object stored and managed in the process object ACL database 25, and determine whether or not a valid access right exists in the requesting user or group.

The process instance database 24 stores process instances, and have various sorts of tables described later.

The process object ACL database 25 stores the access rights for the process objects and so forth, and manages them.

It is noted that, as described above, the process defining tool 11, the process execution editing tool 12, the work flow application 13 and so forth are mounted in the client, while the process definition managing part 21, the process definition database 22, the work flow engine 23, the process instance database 24, the process object ACL database 25 and so forth are mounted in the server. Further, the process defining tool 11, the process execution editing tool 12, the work flow application 13, the process definition managing part 21, the process definition database 22, the work flow engine 23, the process instance database 24, the process object ACL database 25 and so forth may be mounted as Web services. When such a configuration is taken, communication is made between the client and the server according to SOAP (simple object access protocol) or such based on XML (extensible markup language) or HTTP (hypertext transfer protocol).

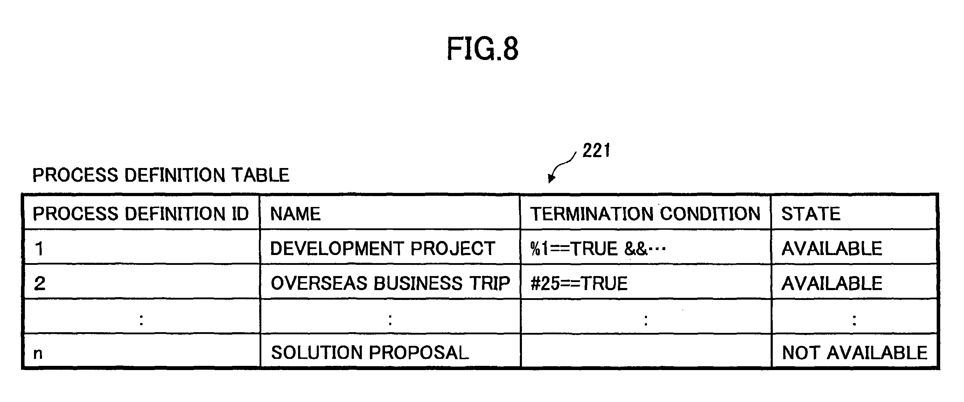

FIG. 8 shows an example of a process definition table 221 provided in the process definition database 22, includes a 'process definition ID' field identifying the process definition; a 'name' field indicating a name of the process definition; a 'termination condition' field indicating the termination condition of the process; and a 'state' field indicating whether or not the process definition is usable.

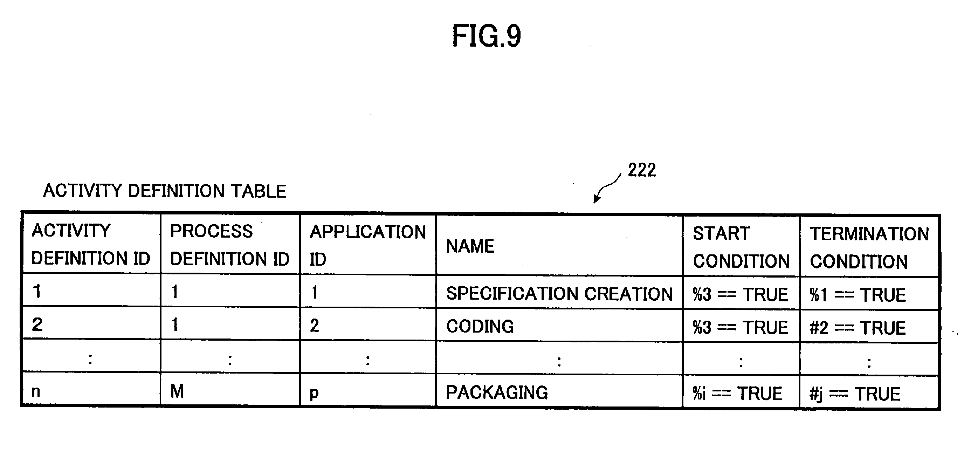

FIG. 9 shows an example of an activity definition table 222 provided in the process definition database 22, has an 'activity definition ID' field identifying the activity definition; a 'process definition ID' field indicating the process definition accommodating the activity; an 'application ID' field indicating the work flow application corresponding to the activity; a 'name' field indicating the name of the activity; a 'start condition' field indicating the start condition of the activity; and a 'termination condition' field indicating the termination condition of the activity. '%' in the 'start condition' and 'termination condition' denotes the process variable definition, and '#' denotes the activity variable definition.

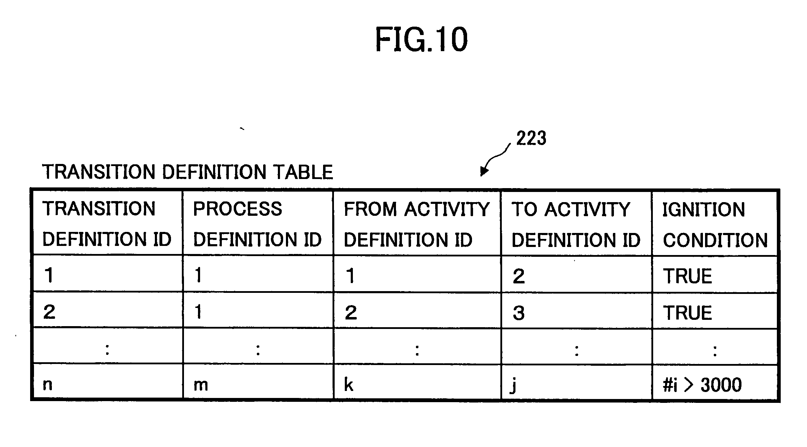

FIG. 10 shows an example of a transition definition table 223 provided in the process definition database 22, has a 'transition definition ID' field identifying the transition definition; a 'process definition ID' field indicating the process definition accommodating the transition; a 'from activity definition' field indicating the activity definition at the start point of the transition; a 'to activity definition' field indicating the activity definition at the end point of the transition; and an 'ignition condition' field indicating the transition ignition condition.

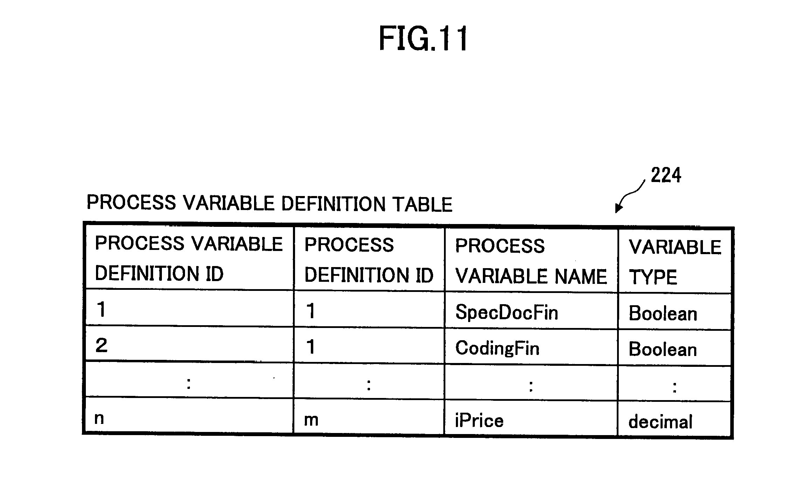

FIG. 11 shows an example of a process variable definition table 224 provided in the process definition database 22, and has a 'process variable definition' field identifying the process variable; a 'process definition ID' field indicating the corresponding process definition; and a 'variable type' field indicating the process variable type. It is noted that the process variable definition table 224 holds a template of the process variable, and thus, makes it easier to reuse the process variable which is frequently used.

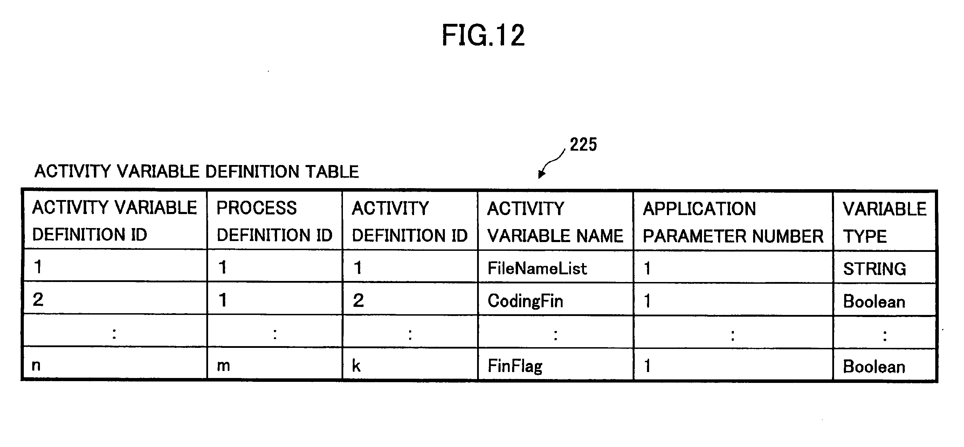

FIG. 12 shows an example of an activity variable definition table 225 provided in the process definition database 22, and has an 'activity variable definition ID' field identifying the activity variable definition; a "Process definition ID' field indicating the corresponding process definition; an 'activity definition ID' field indicating the corresponding activity definition; an 'activity variable name' field indicating the name of the activity variable; an application parameter number' field indicating the corresponding work flow application parameter; and a 'variable type' field indicating the activity variable type. It is noted that the 'application parameter number' corresponds to a parameter number described in the parameter list of an application definition table 227 described later, and has a NULL value when it has no correspondence.

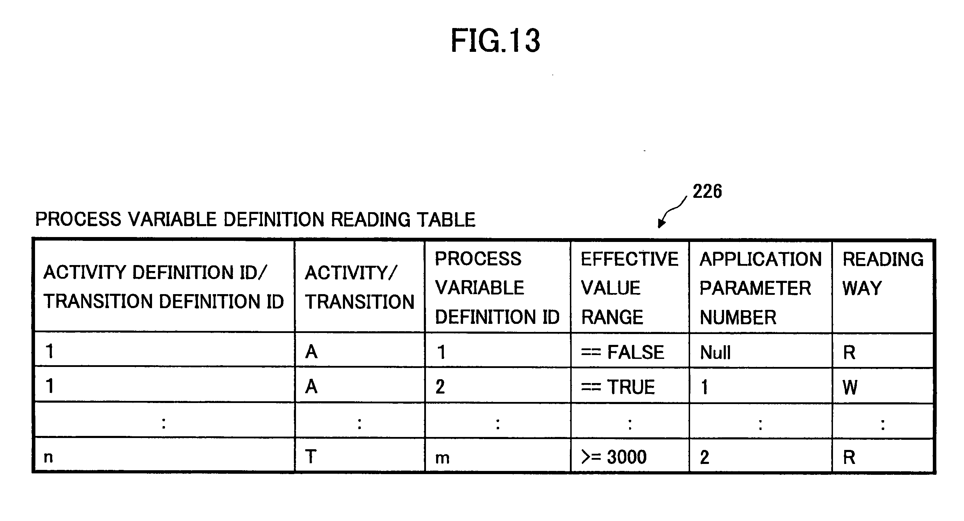

FIG. 13 shows an example of a process variable definition reading table 226 provided in the process definition table 22, and has an 'activity definition ID/transition definition ID' field indicating the activity definition or the transition definition; an 'activity/transition' field indicating a distinction between the activity and transition (A: activity; T: transition); a 'process variable definition ID' field indicating the process variable definition to read or update; an 'effective value range' field indicating a possible effective range of the value of the process variable; an 'application parameter number' field indicating the corresponding work flow application parameter; and a 'reading way' field indicating a way of reading or updating (R; reading; W: updating). The 'application parameter number' corresponds to the parameter number described in the parameter list of an application definition table 227 described later, and has a NULL value when no correspondence exists.

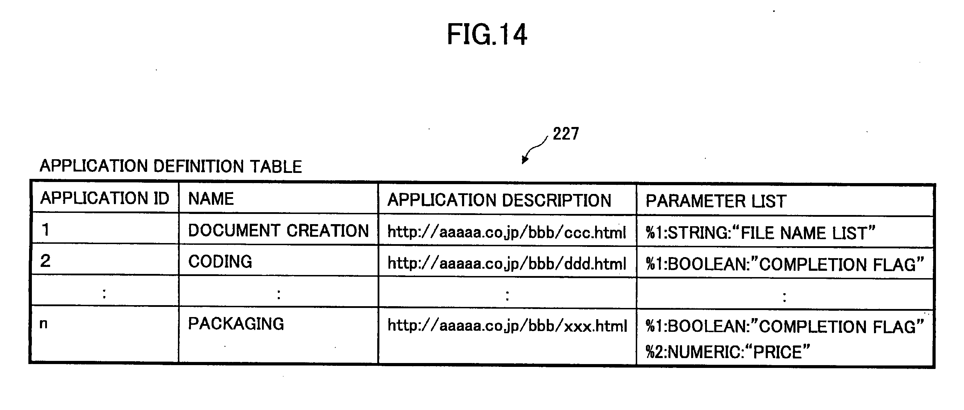

FIG. 14 shows an example of an application definition table 227 provided in the process definition database 22, and has an 'application ID' field identifying the work flow application; a 'name' field indicating the name of the work flow application; an 'application description' field indicating an entry of the work flow application; and a 'parameter list' field indicating the parameter list used by the work flow application. As the 'application description', here, a Web application is assumed, and an example of URL (uniform resource locator) is shown.

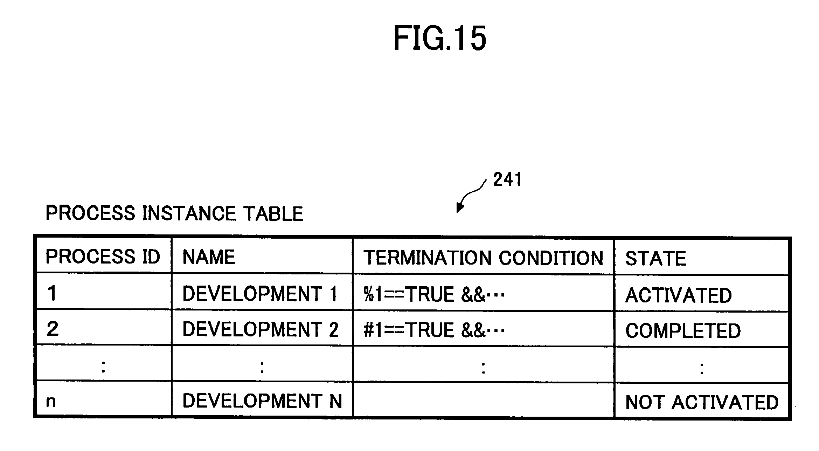

FIG. 15 shows an example of a process instance table 241 provided in the process definition database 22, and has a 'process ID' field identifying the process (process instance); a 'name' field indicating the name of the process; a 'termination condition' field indicating the termination condition of the process; and a 'state' field indicating the state of the process.

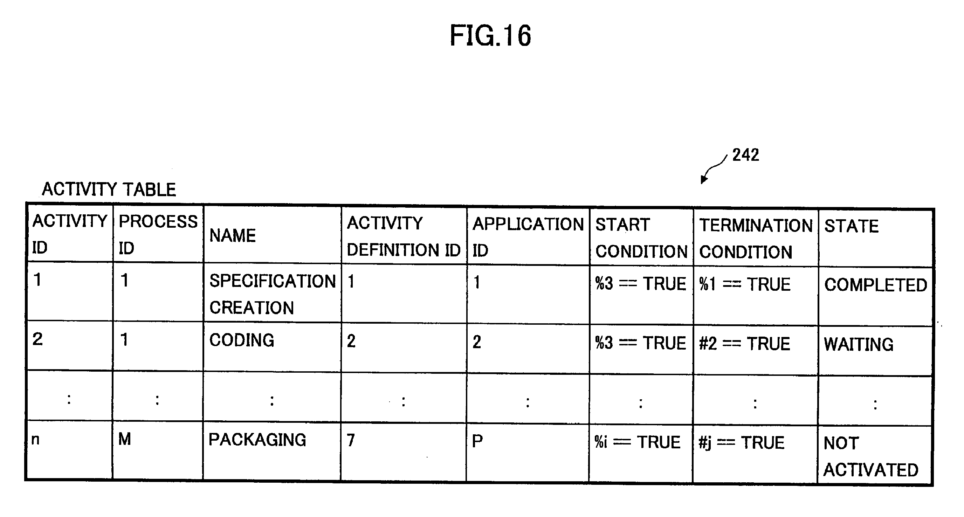

FIG. 16 shows an example of an activity table 242 provided in the process instance database 24, and has an 'activity ID' field identifying the activity; a 'process ID' field indicating the process accommodating the activity; a 'name' field indicating the name of the activity; an 'activity definition ID' field indicating the corresponding activity definition; an 'application ID' field indicating the corresponding work flow application; a 'start condition' field indicating the activity start condition; a 'termination condition' field indicating the activity termination condition; and a 'state' field indicating the state of the activity. '%' in the 'start condition' and the 'termination condition' denotes the process variable definition, and '#' denotes the activity variable definition.

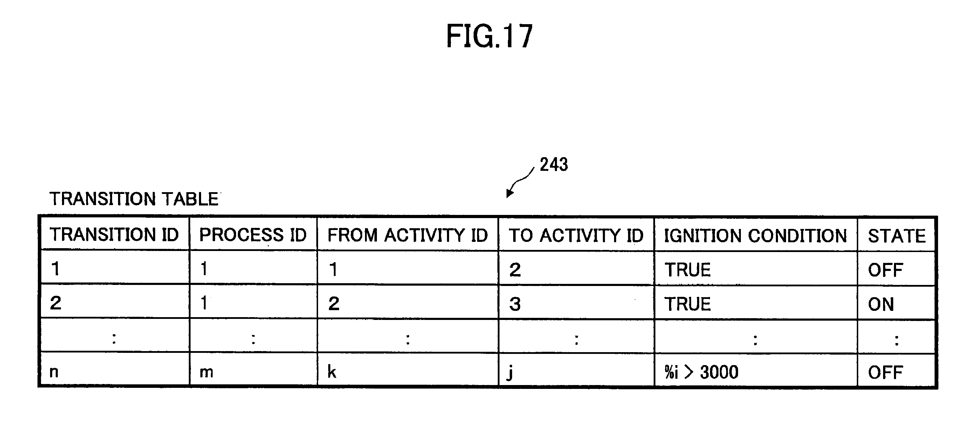

FIG. 17 shows an example of a transition table 243 provided in the process instance database 24, and has a 'transition ID' field identifying the transition; a 'process ID' field indicating the process accommodating the transition; a 'from activity ID' field indicating the activity on the starting side of the transition; a 'to activity ID' field indicating the activity on the ending side of the transition; an 'ignition condition' field indicating the transition ignition condition; and a 'state' field indicating the state of the transition.

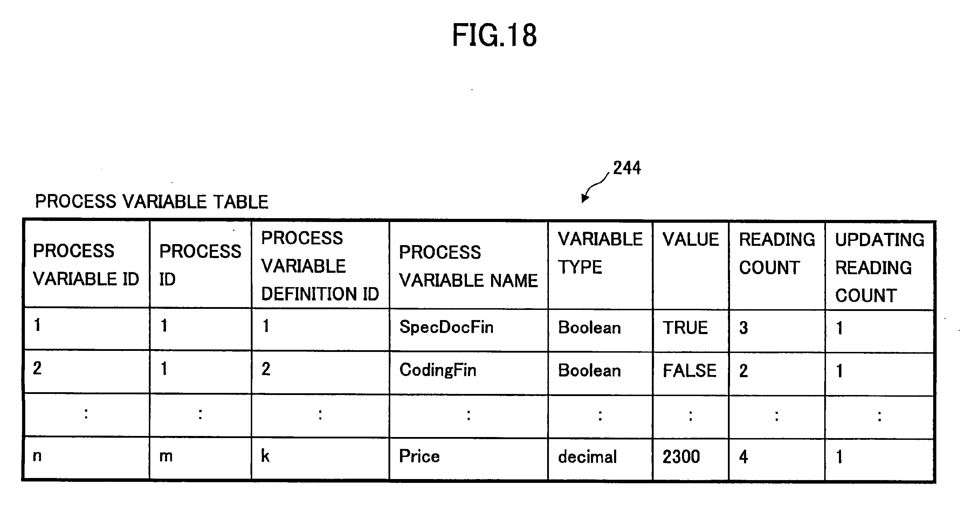

FIG. 18 shows an example of a process variable table 244 provided in the process instance database 24, and has a 'process variable ID' field identifying the process variable; a 'process ID' field indicating the corresponding process; a 'process variable definition ID' field indicating the corresponding process variable definition; a 'process variable name' field 'indicating the name of the process variable; a 'variable type' field indicating the process variable type; a 'value' field indicating the value of the process variable; a 'reading count' field indicating a value such that, when the process variable is unique to the process, an initial value is '1', and thereto the number of the activities and the transitions which read the process variable is added; and a 'reading updating count' field indicating the number of the activities and transitions which update the process variable.

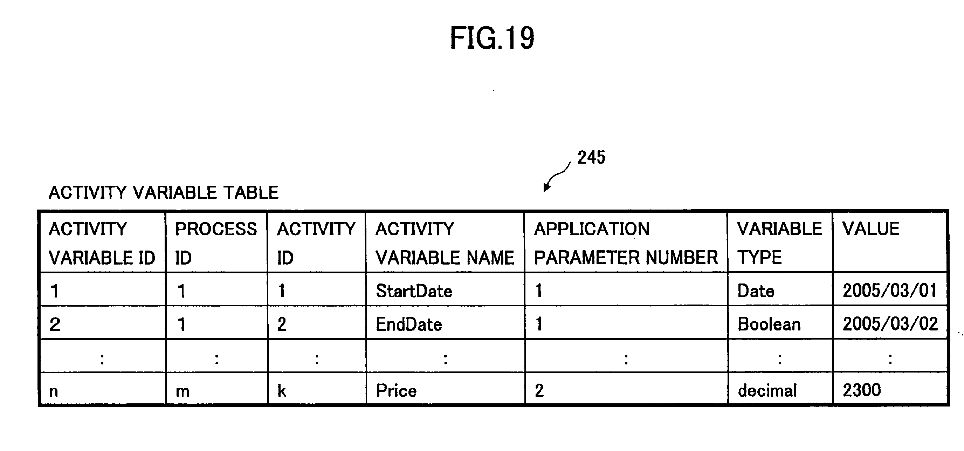

FIG. 19 shows an example of an activity variable table 245 provided in the process instance database 24, and has an 'activity variable ID' field identifying the activity variable; a 'process ID' field indicating the corresponding process; an 'activity ID' table indicating the corresponding activity; an 'activity variable name' field indicating the name of the activity variable; an 'application parameter number' field indicating the corresponding work flow application parameter; a 'variable type' field indicating the activity variable type; and a 'value' field indicating the value of the activity variable. The 'application parameter number' corresponds to a parameter number described in the parameter list of an application definition table 227, and has a NULL value when it has no correspondence.

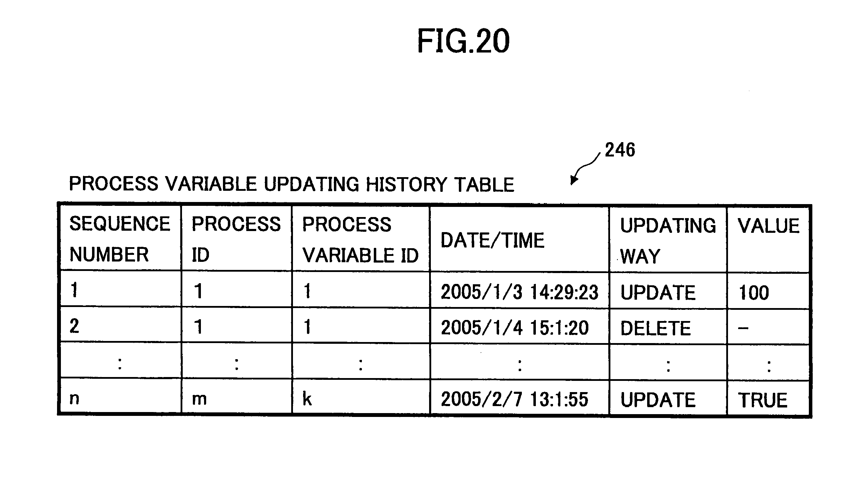

FIG. 20 shows an example of a process variable updating history table 246 provided in the process instance database 24, and has a 'sequence number' field identifying the history data; a 'process ID' field indicating the corresponding process; a 'process variable ID' field indicating the corresponding process variable; a 'date/time' field indicating the data/time of the corresponding event; an 'updating way' field indicating an updating way for the process variable; and a 'value' field indicating the value after the updating.

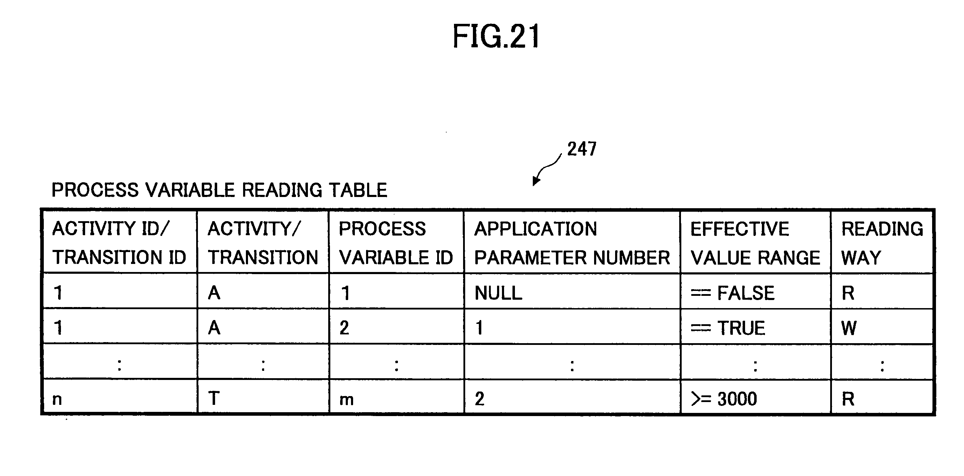

FIG. 21 shows an example of a process variable reading table 247 provided in the process instance database 24, and has an 'activity ID/transition ID' field indicating the activity or the transition; an 'activity/transition' field indicating a distinction between the activity and transition (A: activity; T: transition); a 'process variable ID' field indicating the process variable to read or update; an 'application parameter number' field indicating the corresponding work flow application parameter; and a 'reading way' field indicating a way of reading or updating (R; reading; W: updating reading).

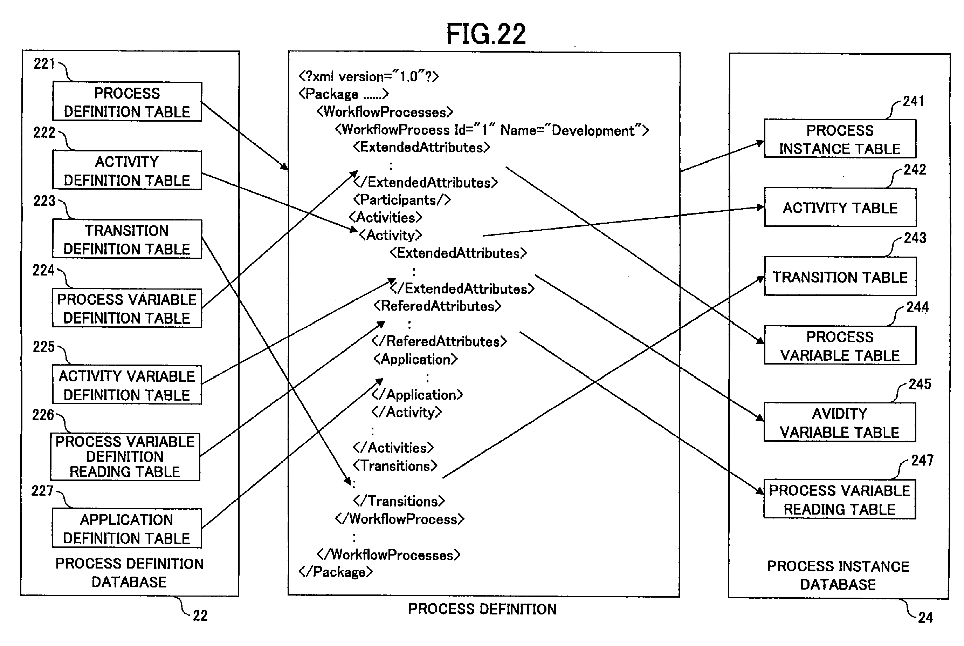

FIG. 22 shows a correspondence relationship between the process definition XML descriptions and the respective tables. The process definition entirety corresponds to the process definition table 221 and the process instance table 241; '<ExtendedAttributes>' tag part immediately below '<WorkflowProcesses>' corresponds to the process variable definition table 224; '<Activity>' tag part corresponds to the activity definition table 222; immediately below'<ExtendedAttributes>' tag part corresponds to the activity variable definition table 225 and the activity variable table 245; '<ReferedAttributes>' tag part corresponds to the process variable definition reading table 226 and the process variable reading table 247: '<Application> tag part corresponds to the application definition table 227; and '<Transitions> tag part corresponds to the transition definition table 223 and the transition table 243.

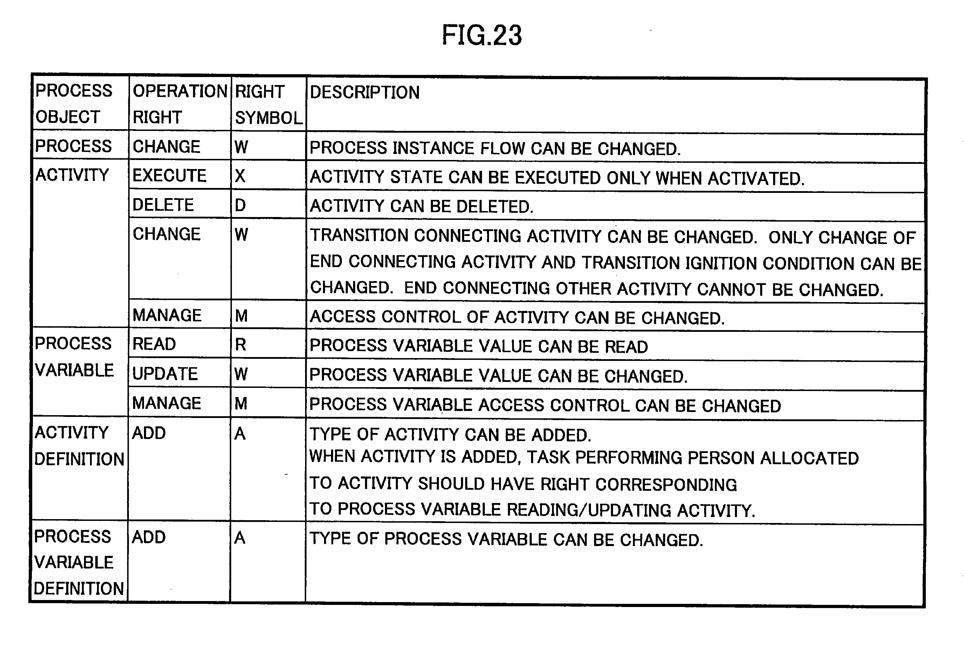

FIG. 23 shows an example of the access control for the process object, and prescribes the operation right to; change the activity; execute, delete, manage the activity; read, update, manage the processes variable; add the activity definition; and add the process variable definition. These operation rights are held in the process definition database 22 as a part of the process definition.

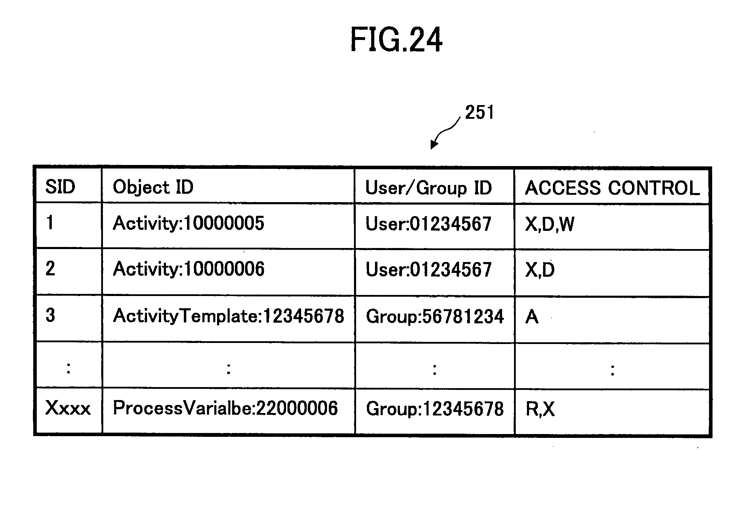

FIG. 24 shows an example of the access control list table 251 provided in the process object ACL database 25, and has a 'SID (security ID)' field identifying the particular item; a 'Object ID' field indicating the process object; a 'User/Group ID' field indicating a user or a group to be given the operation right; and an 'access control' field indicating the operation right. Symbols in the 'access control' column are right symbols shown in FIG. 23.

### <Operation>

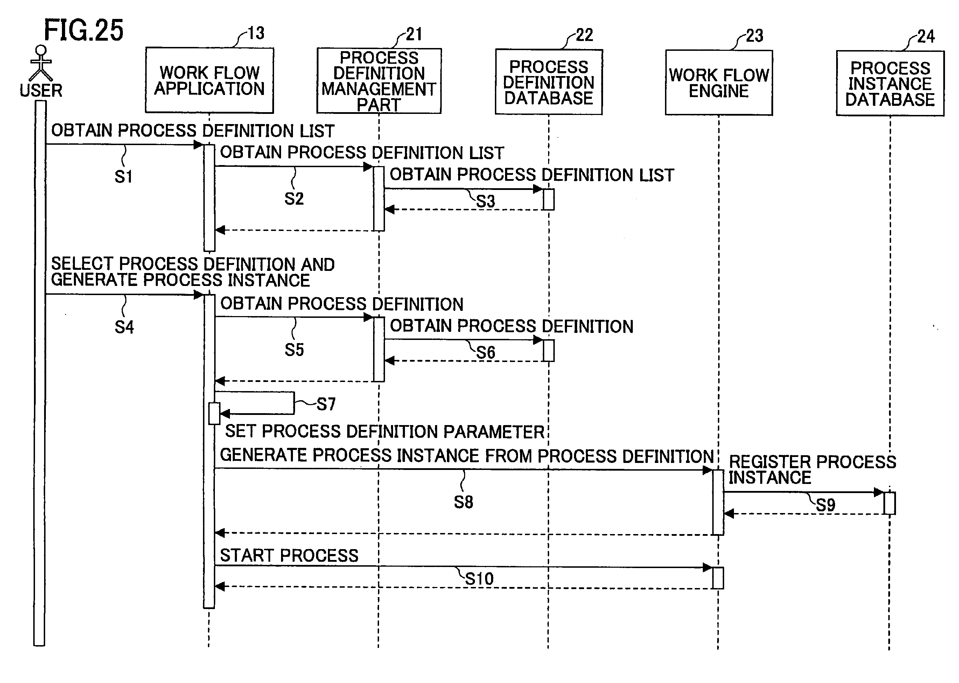

FIG. 25 shows a sequence diagram of a processing example for when a process is started.

First, when a user requests the work flow application 13 for obtaining a process definition list (Step S1), the work flow application 13 requests the process definition managing part 21 for the process definition list (Step S2), and the process definition managing part 21 obtains the process definition list from the process definition database 22 (Step S3). The thus-obtained process definition list is sent to the work flow application 13 as a response, and is displayed by means of the work flow application in such a condition that the user can select therefrom.

Next, when the user selects a desired process definition and requests generation of a process instance (Step S4), the work flow application 13 requests the process definition from the process definition managing part 21 (Step S5), which then obtains the process definition from the process definition database 22 (Step S6). The thus-obtained process definition is sent to the work flow application 13 as a response, and the work flow application 13 then sets a parameter of the process definition (Step S7), and then, requests the work flow engine 13 for generation of the process instance (Step S8). The work flow engine 13 registers the process instance in the process instance database 24, and thus, generates the process instance (Step S9). The matter that the process instance is thus generated is then sent to the work flow application 13 as a response.

The, the work flow application 13 requests the work flow engine 13 for starting of execution of the process (Step S10), and thus, execution of the process is started. After that, according to a work flow defined by the process definition, task processing is carried out.

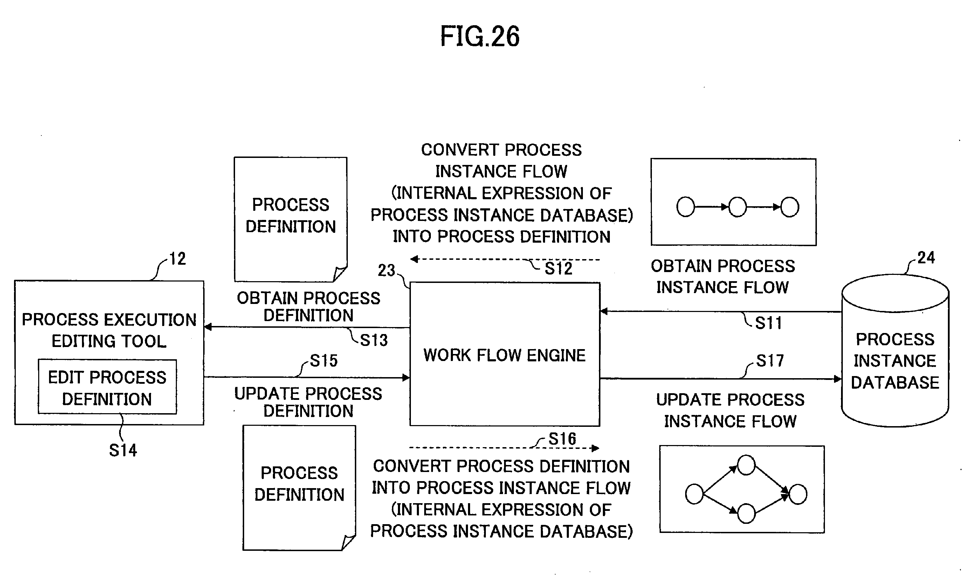

FIG. 26 shows a concept of process change, and generally shows processing carried out when an actual work is to be carried out in a manner different from that originally defined.

In FIG. 26, after the process is stopped, the work flow engine 23 obtains the process instance flow from the process instance database 24 (Step S11), and the work flow engine 23 converts the obtained process instance flow into the process definition in a form of an internal expression of the process instance database 24 (Step S12). Then, the process execution editing tool 12 obtains the process definition from the work flow engine 23 (Step S13).

The process execution editing tool 12 carries out editing on the process definition thus obtained (Step S14), and requests the work flow engine 23 for updating the process definition (Step S15).

The work flow engine 23 converts the process definition thus obtained from the process execution editing tool 12 into the form of internal expression of the process instance database 24 (Step S16), and thus carries out updating of the process instance flow on the process instance database 24 (Step S17). Then, the once stopped process is re-started, and thus, the work flow thus changed through the editing is validated.

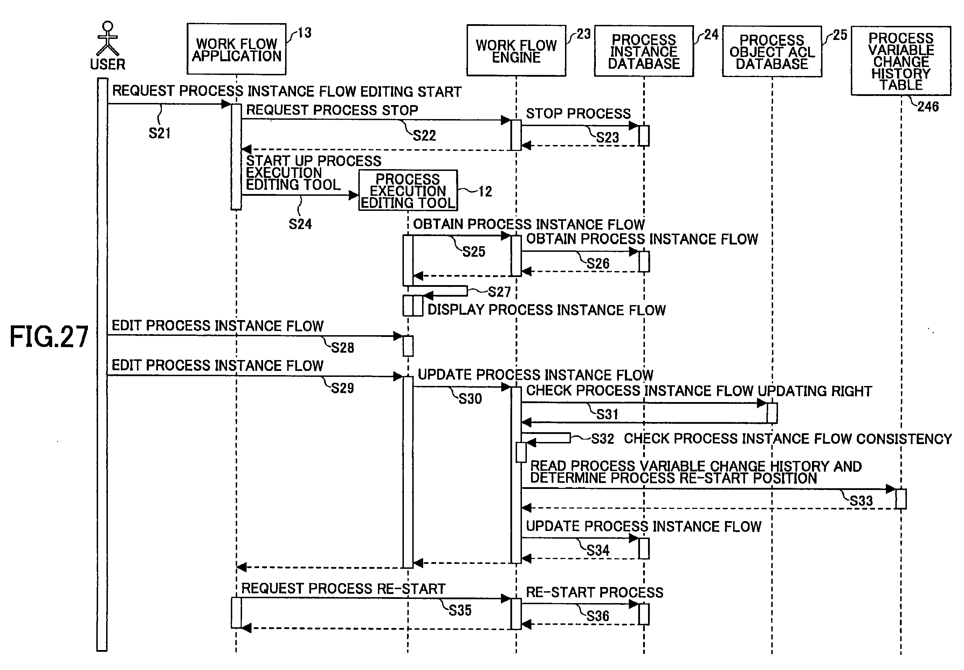

FIG. 27 shows a sequence diagram of a processing example when a process is changed. In FIG. 27, when the user requests the work flow application 13 for starting editing on the process instance flow during executing of the process (Step S21), the work flow application 13 requests the work flow engine 23 for stopping the process (Step S22), the work flow engine 23 stops the process by changing the state of the process in the process instance database 24 into 'suspended' (Step S23). The matter that the process is thus stopped is sent to the work flow application 13 as a response.

The work flow application 13 starts up the process execution editing tool 12 (Step S24), which then obtains the process instance flow from the process instance database 24 via the work flow engine 23 (Steps S25, S26), and displays the process instance flow (Step S27).

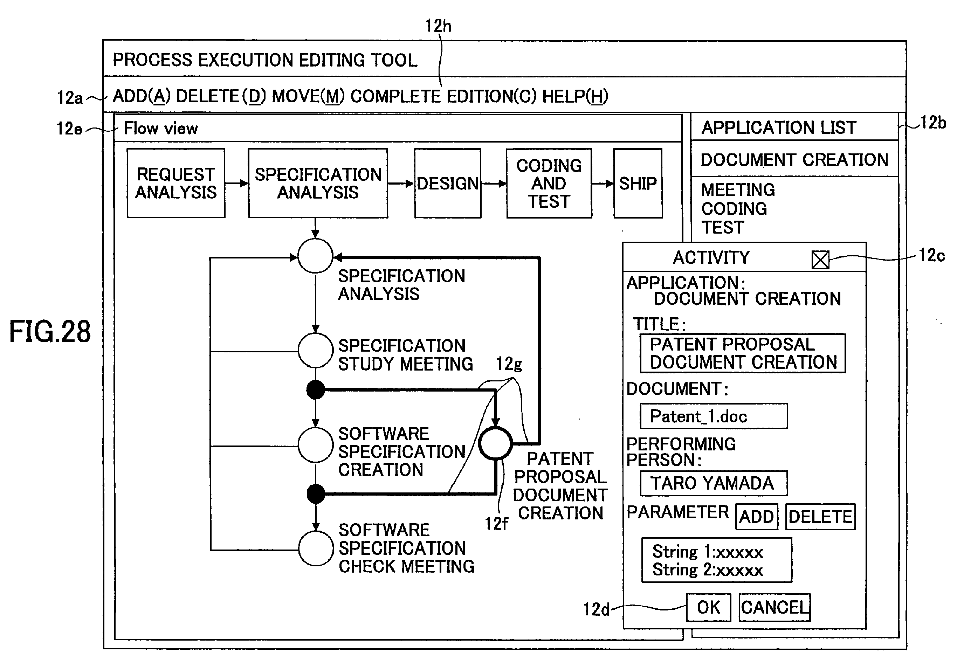

The user carries out editing operation on the process instance flow by means of the process execution editing tool 12 (Step S28). FIG. 28 shows one example of a graphical user interface (GUI) of the process execution editing tool 12, for when an activity is added, which is one example of the editing. There, adding of the activity is carried out by the following procedure:
(1) In the 'add' menu 12a, 'activity' is selected.
(2) From the application list 12b, 'document creation' is selected.
(3) The activity setting window 12c is displayed.
(4) A parameter (title: 'patent document creation' or such) is set in the activity setting window 12c, and the 'OK' button is pressed.
(5) In the 'Flow View' window 12e, the activity 'patent document creation' is displayed.
(6) In the 'add' menu 12a, 'transition' is selected, and the transition 12g is added.
(7) 'Complete edition' 12h is selected.

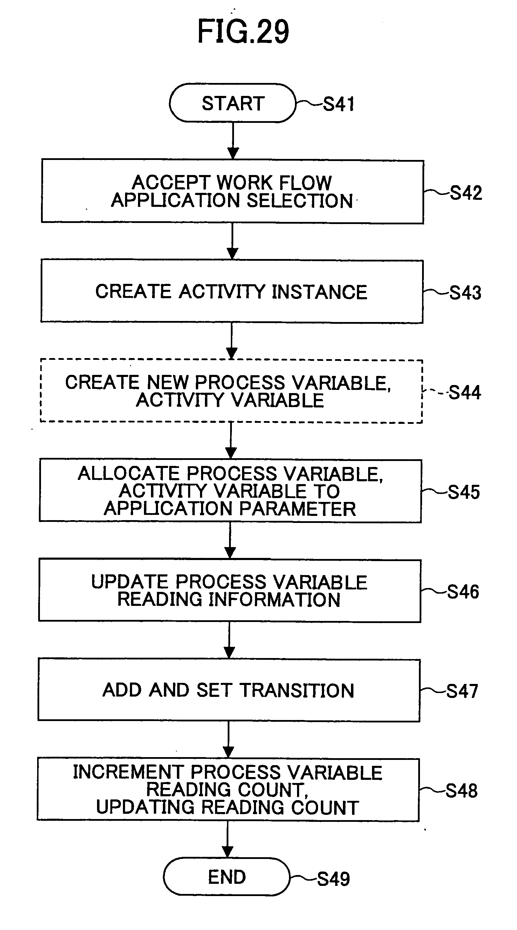

FIG. 29 shows a flow chart of a processing example of the system side for adding the activity or such.

When the processing is started in response to a request for adding the activity (Step S41), selection by the work flow application is accepted (Step S42), and the activity instance is produced (Step S43). On this occasion, in order to display a list from which the selection of the work flow application is made possible, the application definition reading table 227 (FIG. 14) is read, and updating of the activity table 242 (FIG. 16) is carried out for the purpose of producing the activity instance.

Then, as the necessity arises, a new process variable or activity variable is produced (Step S44). On this occasion, the process variable definition table 224 (FIG. 11) is read for the purpose of obtaining a template for the process variable, and also, updating of the process variable table 244 (FIG. 18) is carried out for the purpose of this production. As to the activity variable, updating of the activity variable table 245 (FIG. 19) is carried out. It is noted that a new process variable definition may be added to the process variable definition table 224 with the use of the process defining tool 11 (FIG. 7).

Then, as to the existing or newly produced process variable or activity variable, allocation to the selected parameter of the work flow application is carried out (Step S45). On this occasion, updating of the process variable table 244, the activity variable table 245 and the process variable reading table 247 (FIG. 21) is carried out.

Next, the process variable reading information is updated (Step S46). On this occasion, the process reading table 247 is updated.

Next, adding and setting of the transition are carried out (Step S47). On this occasion, the transition table 243 (FIG. 17) is updated accordingly.

Next, the reading count or the reading updating count of the corresponding one of the process variables read or updated by the added activity or transition is incremented (added by one) (Step S48). On this occasion, the process variable table 244 is updated accordingly.

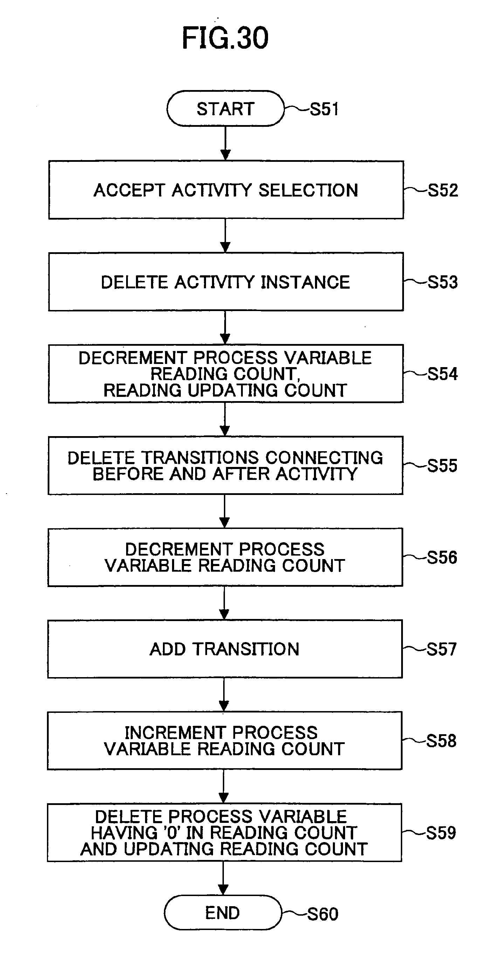

FIG. 30 shows a flow chart of a processing example on the system side for deleting the activity or such.

When the processing is started (Step S51), selection of the activity to delete is accepted (Step S52), and the activity instance is deleted (Step S53). On this occasion, the activity table 242 and the activity variable table 245 are updated accordingly.

Next, the reading count or the reading updating count of the corresponding one of the process variables read or updated by the deleted activity is decremented (subtracted by one) (Step S54). On this occasion, the process variable table 244 is updated accordingly.

Next, the transitions connected before and after the deleted activity are deleted (Step S55). On this occasion, the transition table 243 is updated accordingly.

Next, the reading counts of the process variables read by the deleted transitions are decremented (Step S56). On this occasion, the process variable table 244 is updated accordingly.

Next, a new transition is added (Step S57). On this occasion, the transition table 243 is updated accordingly.

Next, the reading count of the process variable read by the added transition is incremented (Step S58). On this occasion, the process variable table 244 is updated accordingly.

Next, the process variable having both the reading count and the reading updating count being '0' is deleted (Step S59). On this occasion, the process variable table 244 is updated accordingly. Thus, by deleting the process variable read neither by any activity nor by any transition, it is possible to create a state in which no unnecessary process variable for reuse is included. It is noted that, as to the process variable unique to the process, the initial value of the reading count is previously set as '1', and thus, it is not deleted even when all the reading activities or transitions are deleted.

Returning to FIG. 27, after the editing of the process instance flow is completed (Step S28), the user requests the process execution editing tool 12 for updating the process instance flow (Step S29), and the process execution editing tool 12 requests the work flow engine 23 for updating the process instance flow (Step S30).

The work flow engine 23 receiving this request checks the process object ACL database 25 as to whether or not the user (editor) has the right to change the process instance flow (Step S31). When the user does not have the changing right, the user is notified of that the user does not have the changing right. Thus, the process is prevented from being changed by the user who does not have the right.

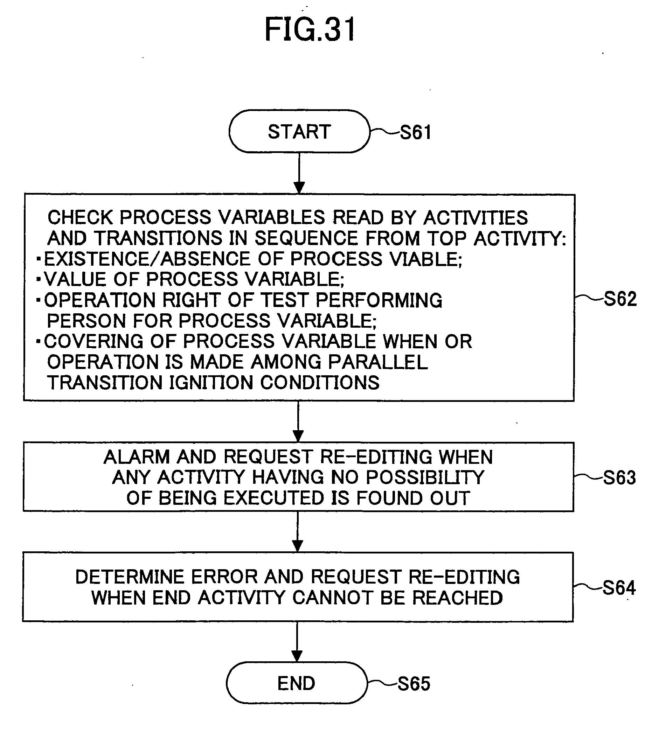

On the other hand, when the check for the changing right results in success, the work flow engine 23 then makes a check for consistency (executability) of the process instance flow (Step S32). FIG. 31 shows a flow chart of a processing example of the process instance flow consistency check.

In FIG. 31, when the processing is started (Step S61), in sequence from the top activity, the process variables read by the activities and the transitions are checked (Step S62) with the use of the process variable table 247 (FIG. 21). The specific items to check on this occasion include, for example:
(1) existence/absence of the process variable;
(2) the value of the process variable (whether or not the value of the final activity which has updated the process variable falls within the effective range of the activity or the transition);
(3) whether or not the task performing person who is allocated to this activity has the operation right on this process variable; and
(4) in a case of the transition, whether or not, all the possible cases of the process variable are covered when OR operation is carried out on the parallel transitions' ignition conditions.

Then, when any activity which has no possibility of being executed is found out, an alarm is given, and re-editing is requested (Step S63).

Further, when the end activity cannot be reached, an error determination is made, and re-editing is required (Step S64).

Thereby, it is possible to avoid unnecessary change of the process, and executability can be ensured.

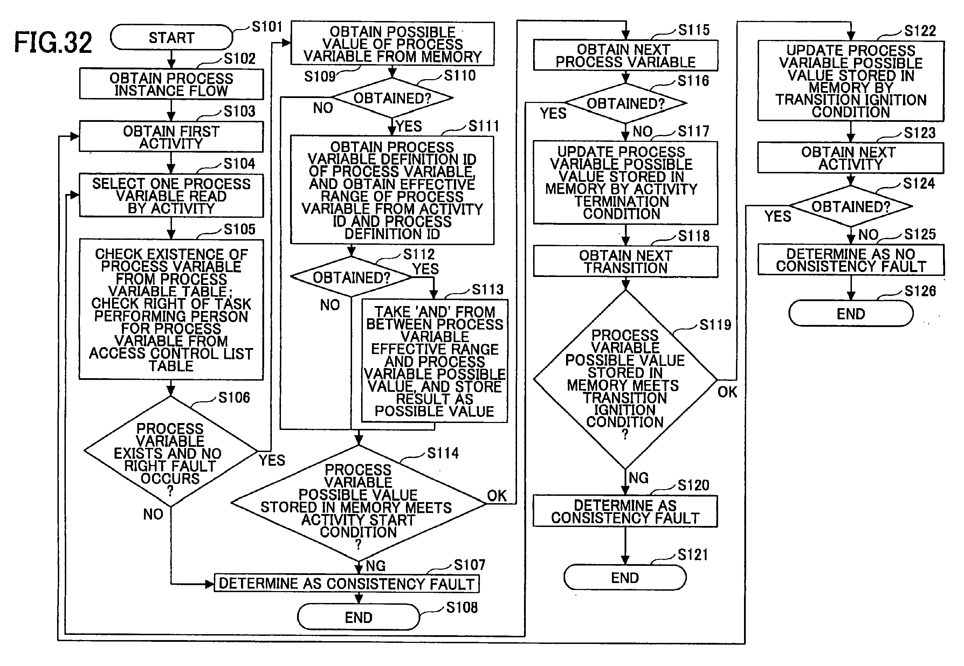

FIG. 32 shows a flow chart of details of the consistency check, and shows more details of the process variable check processing (Step S62) of FIG. 31.

When the processing is started in Step S101 of FIG. 32, the process instance flow is obtained (Step S102), the first activity is obtained (Step S103), and one process variable read by the activity is selected (Step S104).

Then, it is determined whether or not the process variable exists from the process variable table 244, and also, from the access control list table 251, the right of the task performing person for the process variable is checked (Step S105).

When the process variable does not exist or the right has a fault (No in Step S106), it is determined that consistency fault occurs (Step S107), and the processing is finished (Step S108).

On the other hand, when the process variable exists and the right has no fault (Yes in Step S106), the possible value of the process variable is obtained from the memory (Step S109). When the value can be obtained (Yes in Step S110), the process variable definition ID of the process variable is obtained, the effective value of the process variable is obtained from the activity ID and the process definition ID (Step S111). When the value can be obtained (Yes in Step S112), AND operation is carried out between the process variable effective value range and the process variable possible value, and the operation result is stored in the memory as the possible value (Step S113). When the value cannot be obtained (No in Step S110 or S112), no particular processing is carried out.

Next, it is determined in Step S114 whether or not the possible value of the process variable stored in the memory does not meet the activity start condition. When the condition is not met (NG in Step S114), it is determined that consistency fault occurs (Step S107), and the processing is finished (Step S108).

When the condition is met (OK in Step S114), the next process variable is obtained (Step S115). When the value can be obtained (Yes in Step S116), the selection of the process variable read by the activity (Step S104) is returned to.

When the value cannot be obtained (No in Step S116), the process variable possible value stored in the memory is updated by the termination condition of the activity (Step S117), and the next transition is obtained (Step S118).

Then, it is determined in Step S119 whether or not the possible value of the process variable stored in the memory meets the ignition condition of the transition. When the condition is not met (NG in Step S119), it is determined that consistency fault occurs (Step S120), and the processing is finished (Step S121).

When the condition is met (OK in Step S119), the possible value of the process variable stored in the memory is updated by the ignition condition of the transition (Step S122), and the next activity is obtained (Step S123).

When the activity can be obtained (Yes in Step S124), the first step of obtaining the activity (Step S103) is returned to. When the activity cannot be obtained (No in Step S124), it is determined that no consistency fault occurs (Step S125), and the processing is finished (Step S126).

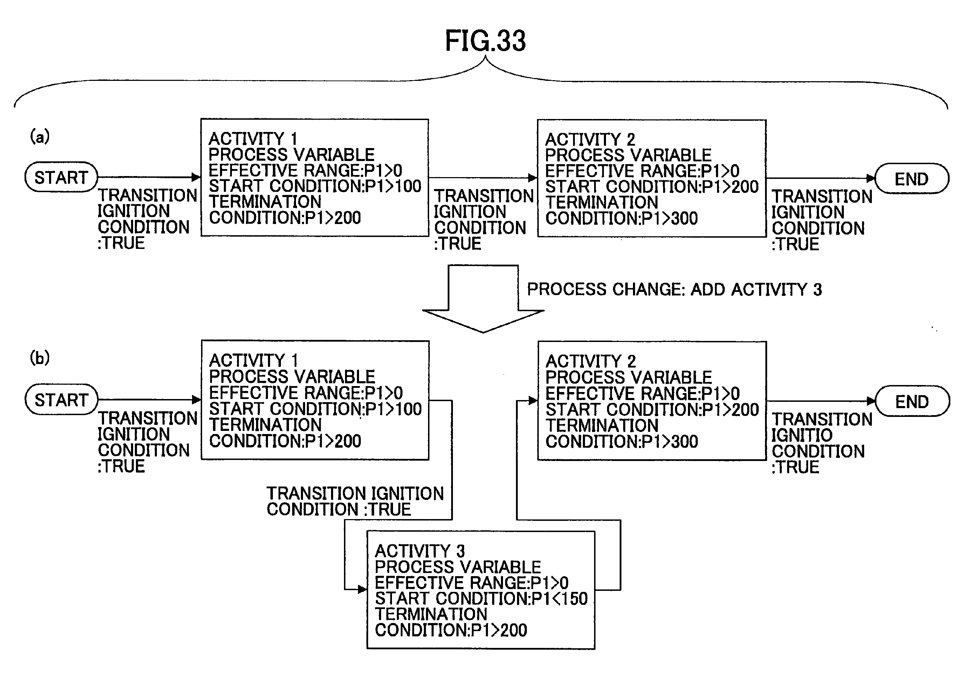

FIG. 33 shows an example of the consistency fault. When Activity 3 is added between Activity 1 and Activity 2 shown in (a), as shown in (b), the termination condition of Activity 1 is P1 > 200, and thus, the value of P1 is more than 200 when the Activity 1 is finished. On the other hand, the start condition of Activity 3 is P1 < 150. Accordingly, Activity 3 is not executed, and the process is not completed. Thus, consistency fault occurs.

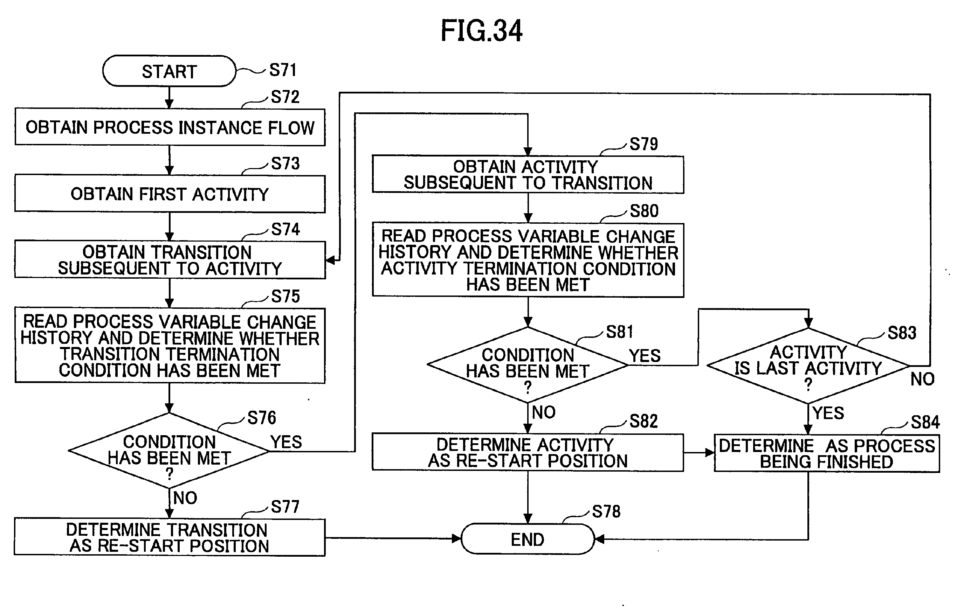

Returning to FIG. 27, when no problem occurs in the process instance flow consistency check (Step S32), the work flow engine 23 reads the process variable change history table 246 and determines the process re-start position (Step S33). FIG. 34 shows a flow chart of a processing example of determining the process re-start position.

In FIG. 34, when the processing is started (Step S71), the process instance flow is obtained from the process instance database 24 (Step S72), the first activity is obtained (Step S73) and the transition subsequent to the activity is obtained (Step S74). Then, the process variable updating history table 246 is read, and it is determined in Steps S75, S76 whether or not the transition termination condition has been ever met. When the condition has never been met (No in Step S76), the transition is determined as the re-start position (Step S77), and the processing is finished (Step S78).

When the condition has ever been met (Yes in Step S76), the activity subsequent to the transition is obtained (Step S79), the process variable updating history table 246 is read, and, it is determined in Steps S80, S81 whether or not the activity termination condition has been ever met. When the condition has never been met (No in Step S81), the activity is determined as the re-start position (Step S82), and the processing is finished (Step S78).

When the activity termination condition has ever been met (Yes in Step S81), it is determined in Step S83 whether or not the activity is the last activity. When it is the last activity (Yes in Step S83), it is determined that the process is finished (Step S84), and the current processing is finished (Step S78).

When it is not the last activity (No in Step S83), the Step S74 of obtaining the transition subsequent to the activity is returned to, and the processing is continued.

Returning to FIG. 27, after the determination of the process re-start position (Step S33), the work flow engine 23 updates the process instance flow on the process instance database 24 (Step S34), and, in response to the updating result, the work flow application 13 requests the work flow engine 23 to re-start the process (Step S35), and the work flow engine 23 re-starts the process (Step S36) by updating the status information in the process instance database 234.

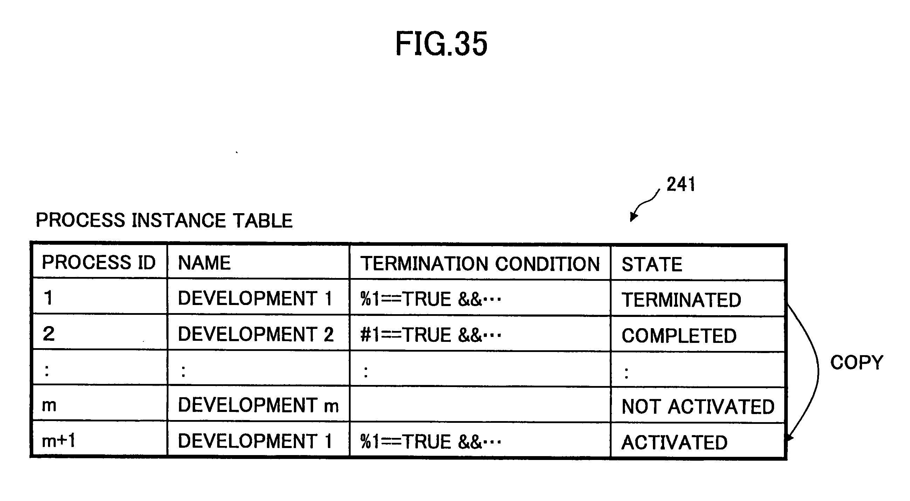

FIGS. 35 through 40 show examples of the respective tables when the process instance is copied and edited. That is, in the above-described operation, the process is stopped as a result of the process being 'suspended'. Editing is then carried out, the right and consistency are checked, and then re-start is made. However, here, the process instance is interrupted (or terminated), a copy thereof is produced, the thus-obtained new process instance is edited, the right and consistency are checked, and then, re-start is made.

FIG. 35 shows a state in which, when the process of process ID: 1 is edited, the state of the process is changed into 'terminated', data of the process is copied, and a new process instance (process ID: m+1) is produced.

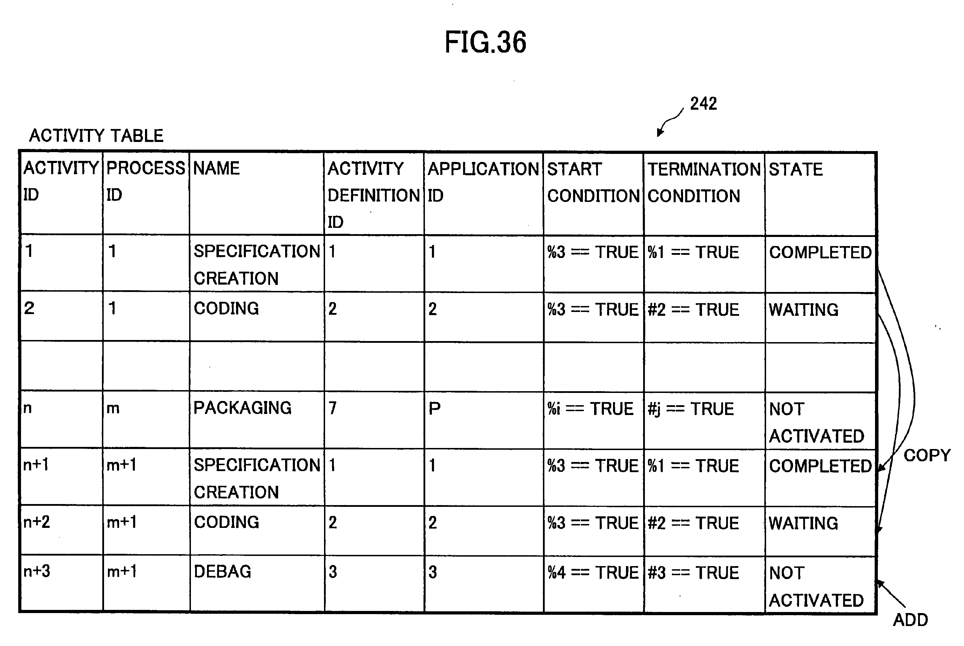

In FIG. 36, the information of the activity of the process (process ID: 1) is copied, only the information of the activity ID and the process ID are to be new IDs, and the other information is inherited as it is. Further, as the necessity arises, an activity is added, and is made to belong to the process of the new process ID (in this example, "m+1").

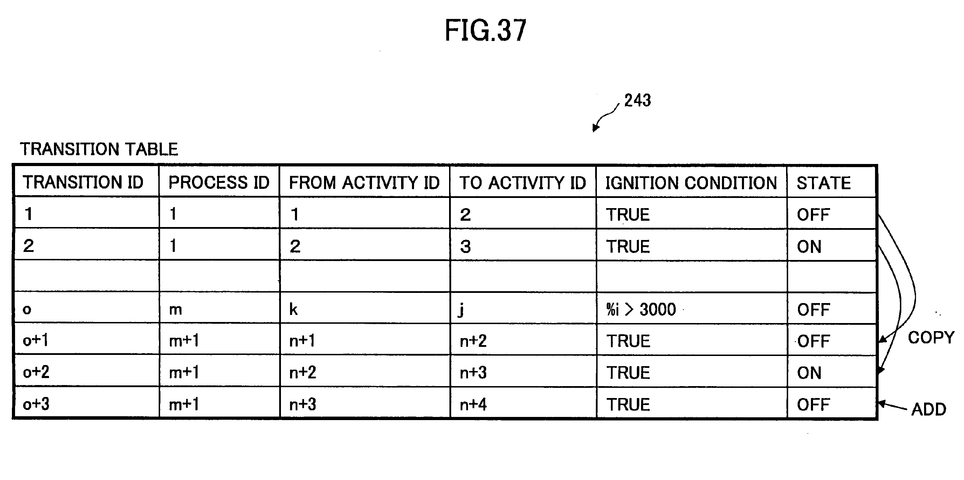

In FIG. 37, a transition of the process ID: 1 is copied, the 'from activity' and 'to activity' are made to have new activity IDs. Further, as the necessity arises, a transition is added or deleted. At this time, each transition's ignition condition is changed as the necessity arises. The state is automatically determined from the ignition condition and states of the process variable/activity variable.

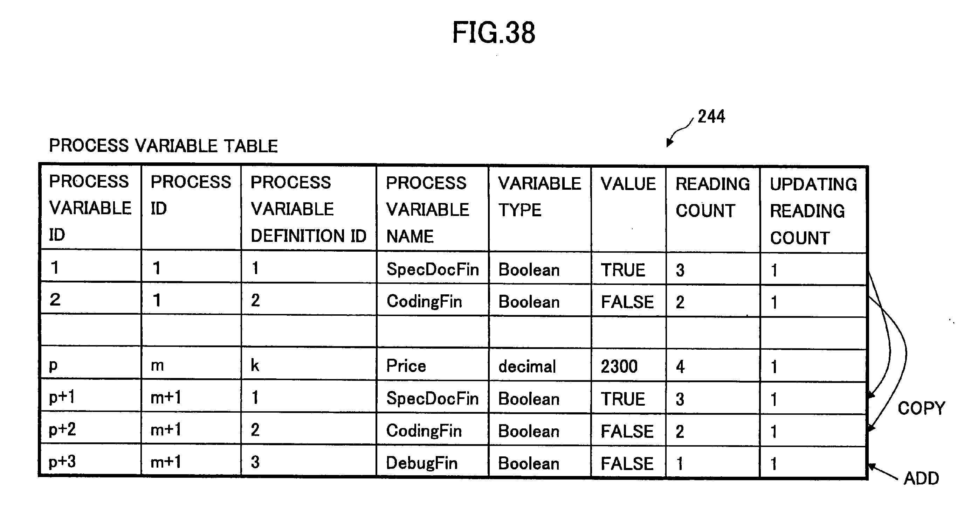

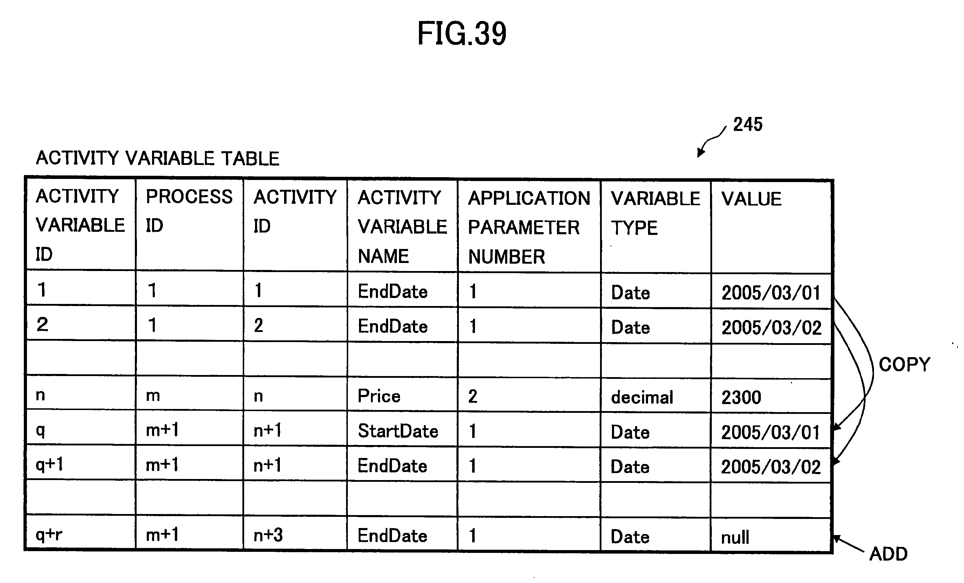

In FIGS. 38 and 39, the process variable and the activity variable of the process ID: 1 are copied, the process ID and the activity ID are to be new IDs, and the other information is inherited. Further, as the necessity arises, new process ID and activity ID are added. Further, the process variable and the activity variable having the reading count and the updating reading count being 0 are deleted.

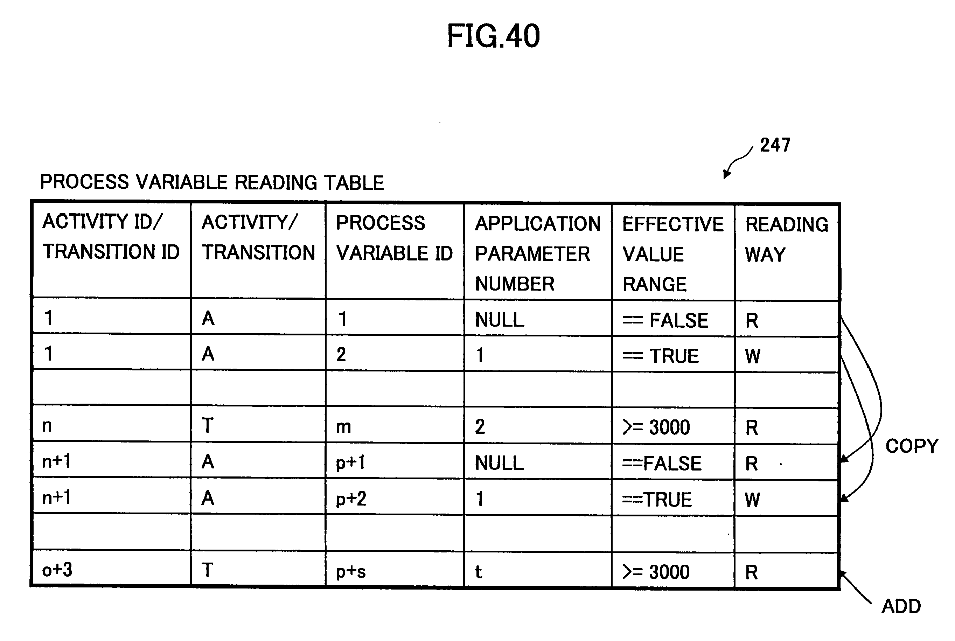

In FIG. 40, reading information concerning the activities and transitions included in the process ID: 1 is copied, the new activity IDs and transition IDs are given, and the other information is inherited. Further, as the necessity arises, new reading information is added, or, the unnecessary reading information is deleted.

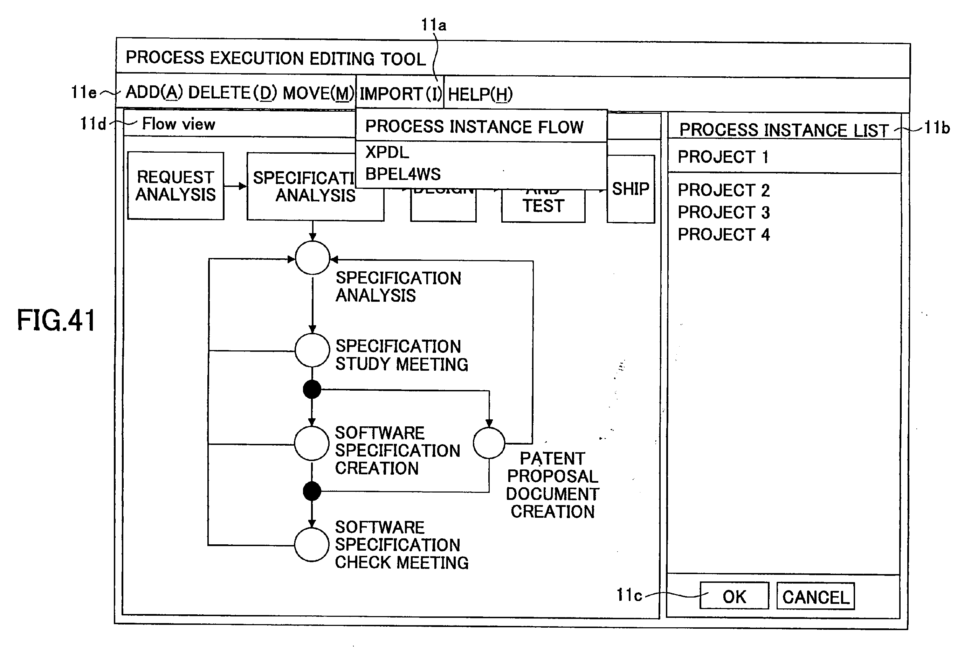

FIG. 41 shows an example of a graphical user interface of the process defining tool for registering the process definition for reuse. That is, by generating a process definition from the process instance flow changed into a form conforming to an actual work proceeding manner by a user, reuse in future is made possible. Here, registration of the process definition is made in the following procedure:
(1) From 'import' menu 11a, the process instance flow is selected, and as a result, a right pane changes into process instance list 11b;
(2) From the process instance list 11b, the desired process instance is selected, and 'OK' button is pressed; as a result, the process instance flow is displayed in a left 'Flow View' window 11d, and the process instance list 11b is closed;
(3) The process instance flow displayed in the 'Flow View' window 11d is edited by the user, then 'add' menu 11e is selected, and processing of registering the process instance flow in the process definition database 22 via the process definition managing part 21 as the process definition is carried out.

As described above, according to the present invention, a process is edited in a state in which the process is stopped, an editor's right and process consistency are checked, the process re-start position is determined, and re-start is made. Accordingly, it is possible to avoid improper change of the process by an end user, the process on execution can be freely changed while executability thereof is ensured.

Further, from execution records of the activities, an improved work flow can be produced, and can be reused.

Further, by managing a progress of a process by the process variables, the process progress situation which can be flexibly modified can be statistically managed. In other words, from the process variables, a check list for evaluating the process progress can be produced.

The preferable embodiment of the present invention has been described above. Although the present invention has been described as the specific embodiment, the specific embodiment may be modified or changed in various manners without departing from the broad concept and scope of the present invention recited the claims below. That is, the present invention is not limited to by the description of the embodiment and accompanying drawings.

The present application is based on Japanese Priority Applications Nos. 2005-154261 and 2006-130553, filed on May 26, 2005 and May 9, 2006, respectively, the entire contents of which are hereby incorporated herein by reference.

## Claims

1. A work flow system for executing a process comprising an activity which is a particular job and a transition which defines an order of the activities, comprising:
means for stopping the process in execution;
means for editing the thus-stopped process;
means for checking consistency of the thus-edited process;
means for determining a re-start position in the process; and
means for re-starting the process from the re-start position.

2. A work flow system as claimed in claim 1, wherein:
said means for checking consistency of the process checks consistency from by reference to at least one of: the existence or absence of a process variable; a specific value of a process variable read or updated by the activity; and the existence or absence of an operation right of a task performing person for the process variable.

3. A work flow system as claimed in claim 2, wherein:
said means for checking consistency of the process determines when an OR operation is made in the ignition conditions of parallel transitions whether or not all the possible cases are covered.

4. A work flow system as claimed in claim 2 or 3, wherein:
said means for checking consistency of the process gives an alarm if it finds any activity which has no possibility of being executed, does not allow editing completion and/or requires re-editing.

5. A work flow system as claimed in claim 2, 3 or 4 wherein:
said means for checking consistency of the process determines that an error occurs if an end activity cannot be reached, does not allow editing completion and/or requires re-editing.

6. A work flow system as claimed in any one of the preceding claims, wherein:
said means for determining the re-start position in the process traces the transitions and the activities from the first activity included in the process, reads a change history of the process variables, and, determines as the re-start position an activity transition that has not met a termination condition.

7. A work flow system as claimed in claim 6, wherein:
said means for determining the re-start position in the process determines that the process is finished if it determines that an activity which has met its termination condition is the last activity.

8. A work flow system as claimed in any one of the preceding claims, wherein:
said means for stopping the process stops the process by setting the process in a suspended state.

9. A work flow system as claim in any one of claims 1 to 7, wherein:
said mean for stopping the process stops the process by setting the process in a terminated state.

10. A work flow system as claimed in any one of the preceding claims, wherein:
contents of editing carried out by said means for editing the process comprises change of all the components of the process comprising addition, deletion, change in an order of the activities, addition and deletion of the process variables, change of a process termination condition, and change of values of the process variables.

11. A work flow system as claimed in any one of the preceding claims, wherein:
said means for editing the process increments a count value of the process variable read or updated by the activity or the transition when adding the activity or the transition, decrements a count value of the process variable read or updated by the activity or the transition when deleting the activity or the transition, and, deletes said process variable having the count value being zero.

12. A work flow system as claimed in any one of the preceding claims, further comprising a means for checking a right of an editor, which checks the right according to an access control list comprising, for each object included in the process, a user or group which is allowed to edit, and access control indicating the operation right.

13. A work flow system as claimed in any one of the preceding claims, further comprising a means for converting a process instance flow obtained from editing and materializing the same into a process definition, and registers the process definition for the purpose of reuse.

14. A work flow processing method for executing a process comprising an activity which is a particular job and a transition which defines an order of the activities, comprising the steps of:
stopping the process on execution;
editing the thus-stopped process;
checking consistency of the thus-edited process;
determining a re-start position in the process; and
re-starting the process from the re-start position.

15. A work flow processing program for causing a computer to execute a process comprising an activity which is a particular job and a transition which defines an order of the activities, said program comprising instructions for causing the program to execute the steps of:
stopping the process on execution;
editing the thus-stopped process;
checking consistency of the thus-edited process;
determining a re-start position in the process; and
re-starting the process from the re-start position.
